# EUROPÄISCHE PATENTSCHRIFT

(11) **EP 2 945 976 B1**
(45) Veröffentlichungstag und Bekanntmachung des Hinweises auf die Patenterteilung: **21.12.2016**
(21) Anmeldenummer: 14700717.3
(22) Anmeldetag: 17.01.2014
(51) Int. Cl.: C08G 77/442, C08J 3/20, C08L 83/10

(54) **BLOCK-COPOLYMERE MIT EINEM POLYDIMETHYLSILOXAN-BLOCK**
BLOCK COPOLYMERS HAVING A POLYDIMETHYLSILOXANE BLOCK
COPOLYMÈRES SÉQUENCÉS POURVUS D'UNE SÉQUENCE POLYDIMÉTHYLSILOXANE

(30) Priorität: 18.01.2013 EP 13151902
(43) Veröffentlichungstag der Anmeldung: 25.11.2015
(73) Patentinhaber: BASF SE, 67056 Ludwigshafen am Rhein (DE)
(72) Erfinder: ENGELBRECHT, Lothar, 10318 Berlin (DE); PIRRUNG, Frank, 67269 Grünstadt (DE); AUSCHRA, Clemens, 79106 Freiburg (DE); KNISCHKA, Ralf, 67434 Neustadt (DE); KRANWETVOGEL, Reiner, 67454 Haßloch (DE)
(86) Internationale Anmeldenummer: PCT/EP2014/050874
(87) Internationale Veröffentlichungsnummer: WO 2014/111503

(56) Entgegenhaltungen:
- WO-A2-2008/025718
- DE-C1- 4 414 465

## Beschreibung

Die vorliegende Erfindung betrifft neue Block-Copolymere, die einen Polydimethylsiloxan-Block und einen oder mehrere, aus ethylenisch ungesättigten Monomeren aufgebauten Polymerblöcke aufweisen. Die Erfindung betrifft auch ein Verfahren zur Herstellung derartiger Blockcopolymere und deren Verwendung, insbesondere als Additive in flüssigen Beschichtungsmittelzusammensetzungen.

Das Aufbringen von flüssigen Polymer-basierten Zusammensetzungen (Flüssigsysteme), wie beispielsweise Farben, Druckfarben und Polymer-basierte flüssige Beschichtungsmittel, in dünnen Schichten auf Oberflächen fester Substrate ist oftmals problematisch, wenn das Flüssigsystem eine hohe Oberflächenspannung aufweist, die Oberflächenspannung des Substrats hingegen gering ist.

Flüssigsysteme enthalten in der Regel neben ein oder mehreren polymeren Harzen ein oder mehrere Lösungs- oder Verdünnungsmittel sowie gegebenenfalls Füllstoffe, Pigmente und/oder Additive. Moderne synthetische Bindemittelsysteme wie Epoxidharze, 2K-Polyurethansysteme, Polyesterharze, Melaminharze sowie strahlungshärtende Bindemittel weisen aufgrund ihrer Zusammensetzung und molekularen Struktur im Vergleich zu traditionellen Bindemitteln auf Basis von oxidativ trocknenden Fettsäuren oder Ölen eine vergleichsweise hohe intrinsische Oberflächenspannung auf. Daher ist es oftmals schwieriger, Flüssigsysteme auf Basis derartiger synthetischer Bindemittelsysteme auf Oberflächen aufzubringen als konventionelle Beschichtungsmittel auf Basis von Alkydharzen oder vergleichbaren, oxidativ trocknenden Ölen oder Fettsäuren.

Naturgemäß weisen insbesondere wässrige Beschichtungsmittelzusammensetzungen eine hohe Oberflächenspannung auf. Um eine gleichmäßig glatte und ästhetisch ansprechende Oberfläche mit hoher Kompaktheit zu erhalten, muss man derartigen Zusammensetzungen Verlaufshilfsmittel zusetzen. Diese Verlaufshilfsmittel bewirken durch Verringerung der Oberflächenspannung der Zusammensetzung ein besseres Ausbreiten der Zusammensetzung auf der Oberfläche des Substrats und ein Fließen des beim Aushärten sich bildenden Polymerfilms, so dass man eine glatte Oberfläche erhält. Aufgrund ihrer Eigenschaft, ein Fließen des sich beim Aushärten bildenden Polymerfilms zu fördern, verringern diese Mittel die Bildung von Fehlstellen, sogenannten Kratern, die durch von außen einwirkende Verunreinigungen oder durch Verunreinigungen auf der Oberfläche des Substrats verursacht werden.

Im Handel sind zahlreiche Additive erhältlich, die eine den Verlauf bzw. das Ausbreiten des Beschichtungsmittels fördernde Wirkung aufweisen und/oder die Bildung von Fehlstellen verringern. Hierzu zählen vor allem um Poly(meth)acrylsäureester, Polysiloxane und deren Gemische, sowie Polyether- oder Polyester-modifizierte Polydimethylsiloxane, weiterhin Wachse und fluorierte Harze. Je nach Art weisen diese Additive unterschiedliche Nachteile auf und können beispielsweise zu einer verstärkten Schaumbildung, Schaumstabilisierung oder zu Problemen bei Folgebeschichtungen führen oder aufgrund von Inkompatibilitäten ihrerseits zu einem Eintrüben oder Glanzverlust der Beschichtung oder zu Migrationsproblemen führen und die Stabilität der Beschichtungszusammensetzung nachteilig beeinflussen.

Block-Copolymere, die einen Polydimethylsiloxan-Block und einen oder mehrere, aus ethylenisch ungesättigten Monomeren aufgebauten Polymerblöcke aufweisen, im Folgenden auch Silikon-Hybridpolymere, sind seit längerem aus dem Stand der Technik bekannt, z.B. aus WO 98/01480 und der dort zitierten Literatur. Derartige Blockcopolymere weisen einen zentralen Polysiloxan-Block und ein oder zwei, von polymerisierten ethylenisch ungesättigten Monomeren gebildete Polymerblöcke auf.

WO 00/71606 beschreibt ein Verfahren zur Herstellung von Pfropfcopolymeren mit einem Polysiloxan-Block, bei dem in einem ersten Schritt in einer polymeranalogen Umsetzung ein Radikalstarter an ein Polysiloxan-Polymer gebunden wird, und anschließend eine Polymerisation ethylenisch ungesättigter Monomere ausgelöst wird.

WO 02/08307 beschreibt ein Verfahren zur Herstellung von Pfropfcopolymeren mit einem Polysiloxan-Block, bei dem in einem ersten Schritt in einer polymeranalogen Umsetzung eine für eine RAFT-Polymerisation (Reversibler Additions-Fragmentierungs-Kettentransfer) geeignete übertragbare Gruppe, z.B. eine Xanthogenat-, Dithioester-, Trithiocarbonat oder Dithiocarbamat-Gruppe an ein Polysiloxan-Polymer gebunden wird, und anschließend eine RAFT-Polymerisation ethylenisch ungesättigter Monomere ausgelöst wird.

Die EP 1375605 A2 beschreibt ein Blockcopolymer, das eine zentrale Polysiloxanhaltige Hauptkette und einen oder mehrere Blöcke aufweist, die aus polymerisierten, ungesättigten Monomeren bestehen, wobei die Blockcopolymere erhältlich sind durch ATR-Polymerisation (ATRP = Atomtransfer initiierte radikalische Polymerisation) ethylenisch ungesättigter Monomere in Gegenwart eines Polysiloxan-haltigen Präpolymers, das mindestens eine für ATRP geeignete übertragbare Gruppe, z.B. einen α-Halogenpropionyl-Rest aufweist. Das Blockcopolymer wird als Verlaufshilfsmittel vorgeschlagen.

Den Verfahren des Standes der Technik ist gemein, dass das Polysiloxan zunächst in einen Makroinitiator überführt wird, der dann Starter für eine kontrollierte radikalische Polymerisation wie RAFT oder ATRP dient. Nachteilig ist die aufwendige Herstellung der Polysiloxan-haltigen Makroinitiatoren und die Qualität der erhaltenen Produkte, da die oftmals nur mäßige Effizienz des Pfropfvorgangs zur Bildung von konventionellen Polymeren als Nebenprodukt führt, die ihrerseits die Produktqualität nachteilig beeinflussen.

Aufgabe der Erfindung ist daher die Bereitstellung von Silikon-Hybridpolymeren, die sich einfach herstellen lassen, einen hohen Anteil an Pfropfpolymer und nur geringe Mengen an konventionellen Polymeren enthalten. Die Polymere sollten insbesondere als Additive für polymerbasierte Flüssigsysteme, insbesondere Flüssigsysteme auf Basis von synthetischen Bindemittelsystemen wie Epoxidharze, 2K-Polyurethansysteme, Polyesterharze, Melaminharze sowie strahlungshärtende Bindemittel, geeignet sein.

Diese und weitere Aufgaben werden durch die im folgenden beschriebenen Blockcopolymere der Formel I gelöst. Gegenstand der Erfindung sind daher Block-Copolymer der allgemeinen Formel I:

A{X-[O-C(O)NH-Y-NH-C(O)-O-M-B]ₖ}ₙ (I)

worin
- n: für eine Zahl im Bereich von 1 bis 40 oder 2 bis 40, insbesondere 1 bis 10 oder 2 bis 10 und speziell für 2 bis 5 steht;
- k: für 1 oder 2 steht;
- A: für einen Poly(dimethylsiloxan)-Block steht;
- B: für einen aus ethylenisch ungesättigten Monomeren aufgebauten Polymerblock steht, der gegebenenfalls eine von Wasserstoff verschiedene Endgruppe aufweist;
- X: für einen bivalenten oder trivalenten Rest mit 2 bis 20 C-Atomen steht, der gesättigt oder ungesättigt ist und der gegebenenfalls 1, 2, 3 oder 4 Substituenten trägt, die unter OH, COOH, CONH₂, C₁-C₄-Alkoxy, C₁-C₄-Alkoxycarbonyl und Halogen ausgewählt sind;
- Y: für einen bivalenten Kohlenwasserstoffrest mit 2 bis 20 C-Atomen steht, der gesättigt oder ungesättigt ist, und
- M: für eine chemische Bindung oder C₂-C₁₀-Alkylen steht, das durch ein oder zwei nicht unmittelbar benachbarte Gruppen, ausgewählt unter O, C(=O)O und (C=O)NH unterbrochen sein kann und das gegebenenfalls 1, 2, 3 oder 4 Substituenten trägt, die unter OH, COOH, CONH₂, C₁-C₄-Alkoxy, C₁-C₄-Alkoxycarbonyl und Phenyl ausgewählt sind.

Die erfindungsgemäßen Block-Copolymere sind mit einer Reihe von Vorteilen verbunden. Sie lassen sich effizient und mit hohen Pfropfausbeuten herstellen. Sie weisen im Vergleich zu den Silikonhybridpolymeren nur einen geringen Anteil an konventionellen polymeren Nebenprodukten auf. Sie eignen sich insbesondere als Additive für polymerbasierte Flüssigformulierungen, insbesondere Flüssigformulierungen auf Basis von synthetischen Bindemittelsystemen wie Epoxidharze, 2K-Polyurethansysteme, Polyesterharze, Melaminharze sowie strahlungshärtende Bindemittel. Sie zeigen eine gute verlaufsfördernde Wirkung und eine gute Kompatibilität mit den polymeren Bindemittelsystemen und führen zu glatten Beschichtungen und verringern die Kraterbildung. Sie führen zudem zu einer Hydrophobierung der Beschichtung und eignen sich daher als schmutzabweisende Additive und als Anti-Graffiti Additive für polymerbasierte Beschichtungsmittelzusammensetzungen.

Gegenstand der Erfindung sind daher auch Polymerzusammensetzungen, enthaltend wenigstens ein erfindungsgemäßes Blockcopolymer der Formel I und ein organisches Bindemittel.

Gegenstand der Erfindung sind daher auch die Verwendung von Blockcopolymeren der Formel I als Additiv in Beschichtungsmittelformulierungen, die wenigstens ein organisches Bindemittel enthalten, insbesondere als Verlaufshilfsmittel oder als schmutzabweisendes Additiv, insbesondere als hydrophobierendes Anti-Graffiti-Mittel.

In Zusammenhang mit den Definitionen der Reste und Atomgruppen in der Formel I, ebenso wie in den im folgenden definierten Formeln II, III und Z gibt das Präfix Cₙ-Cₘ die mögliche Anzahl an Kohlenstoffatome eines jeweiligen Restes oder einer Atomgruppe an.

Alkyl steht für einen gesättigten, linearen oder verzweigten Kohlenwasserstoffrest mit z.B. 1 bis 20 oder 1 bis 6 oder 1 bis 4 C-Atomen. Beispiele für Alkyl sind Methyl, Ethyl, n-Propyl, Isopropyl, n-Butyl, 2-Butyl, Isobutyl, tert-Butyl, n-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 2-Heptyl, 3-Heptyl, 2-Ethylpentyl, 1-Propylbutyl, n-Octyl, 2-Ethylhexyl, Nonyl, Decyl, Undecyl, Dodecyl, Tridecyl, Tetradecyl, Hexadecyl, Octadecyl und Eicosyl, einschließlich der Isomere der vorgenannten Gruppen.

Alkoxy sowie die entsprechenden Teile von Alkoxyalkoxy und Alkoxyalkyl stehen für einen gesättigten, linearen oder verzweigten, über ein Sauerstoffatom gebundenen Kohlenwasserstoffrest mit z.B. 1 bis 6 oder 1 bis 4 C-Atomen. Beispiele für Alkoxy sind Methoxy, Ethoxy, n-Propyloxy, Isopropyloxy, n-Butoxy, 2-Butoxy, Isobutoxy, tert-Butoxy, n-Pentyloxy udn n-Hexyloxy, einschließlich der Isomere der beiden zuletzt genannten Gruppen.

Alkoxyalkyl steht für einen Alkylrest mit in der Regel 1 bis 4 C-Atomen, in dem ein Wasserstoffatom durch eine Alkoxygruppe mit in der Regel 1 bis 4 C-Atomen ersetzt ist.

Alkoxyalkoxy steht für einen Alkoxyrest mit in der Regel 1 bis 4 C-Atomen, in dem ein Wasserstoffatom durch eine Alkoxygruppe mit in der Regel 1 bis 4 C-Atomen ersetzt ist.

Der Begriff Alkylen bzw. Alkandiyl, wie hierin verwendet, bezeichnet eine geradkettige oder verzweigte, gesättigte bivalente Gruppe mit in der Regel 1 bis 10 C-Atomen und insbesondere 21 bis 6 C-Atomen, wie beispielsweise Methylen, 1,2-Ethandiyl, 1,2-Propandiyl, 1,3-Propandiyl, 1,2-Butandiyl, 1,3-Butandiyl, 1,4-Butandiyl, 2-Methyl-1,2-propandiyl, 1,6-Hexandiyl, 1,7-Heptandiyl, 1,9-Nonandiyl, 1,10-Decan-diyl.

Der Begriff Alkenylen bzw. Alkendiyl, wie hierin verwendet, bezeichnet eine geradkettige oder verzweigte, ethylenisch ungesättigte bivalente Gruppe mit in der Regel 2 bis 10 C-Atomen und insbesondere 2 bis 6 C-Atomen, z.B. Propen-1,3-diyl, 2-Buten-1,3-diyl, 2-Buten-1,4-diyl, 2-Penten-1,3-diyl, 2-Penten-1,4-diyl, 2-Penten-1,5-diyl 2-Methyl-2-penten-1,4-diyl etc..

Der Begriff Alkantriyl, wie hierin verwendet, bezeichnet eine geradkettige oder verzweigte, gesättigte trivalente Gruppe mit in der Regel 1 bis 10 C-Atomen und insbesondere 1 bis 6 C-Atomen.

Der Begriff Alkentriyl, wie hierin verwendet, bezeichnet eine geradkettige oder verzweigte, ethylenisch ungesättigte trivalente Gruppe mit in der Regel 2 bis 10 C-Atomen und insbesondere 2 bis 6 C-Atomen.

Der Begriff Cycloalkylen bzw. Cycloalkandiyl, wie hierin verwendet, bezeichnet eine von einem Cycloalkan abgeleitete bivalente Gruppe mit in der Regel 5 bis 10 C-Atomen, wie beispielsweise 1,2-Cyclopentandiyl, 1,3-Cyclopentandiyl, 1,2-Cyclohexandiyl, 1,3-Cyclohexandiyl, 1,4-Cyclohexandiyl oder 1,4-Cycloheptandiyl.

Der Begriff Cycloalkenylen bzw. Cycloalkendiyl, wie hierin verwendet, bezeichnet eine von einem Cycloalken abgeleitete bivalente Gruppe mit in der Regel 5 bis 10 C-Atomen, wie beispielsweise 1,2-Cyclopentendiyl, 1,3-Cyclopentendiyl, 1,2-Cyclo-3-hexendiyl, 1,3-Cyclo-hex-4-endiyl, 1,4-Cyclohex-2-endiyl oder 1,4-Cyclohept-2-endiyl.

Der Begriff Cycloalkantriyl, wie hierin verwendet, bezeichnet eine von einem Cycloalkan abgeleitete trivalente Gruppe mit in der Regel 5 bis 10 C-Atomen.

Der Begriff Cycloalkentriyl, wie hierin verwendet, bezeichnet eine von einem Cycloalken abgeleitete trivalente Gruppe.

Unter einem Polydimethylsiloxan-Block versteht man einen linearen oder verzweigten Polymerrest, welcher überwiegend, d.h. zu wenigstens 90 Gew.-% aus Wiederholungseinheiten der Formel [-Si(CH₃)₂-O-] aufgebaut ist. Daneben weist der Polydimethylsiloxan-Block in der Regel wenigstens eine terminale Gruppe der Formel (CH₃)₃Si-O- oder (CH₃)₂SiH-O- und gegebenenfalls Verzweigungsstellen >Si(CH₃)-O auf. Außerdem kann der Polydimethylsiloxan-Block auch eine oder mehrere Hydrosilaneinheiten der Formel [-Si(CH₃)H-O-] aufweisen.

Im Hinblick auf bevorzugte Ausführungsformen der erfindungsgemäßen Block-Copolymere haben die Variablen in Formel I alleine oder insbesondere in Kombination die folgenden besonderen Bedeutungen.

Die Variable n steht für eine Zahl im Bereich von 1 bis 40, insbesondere 1 bis 10 oder 2 bis 5. Ein Fachmann versteht, dass der Wert n einen Mittelwert, nämlich ein Zahlenmittel darstellt, da es sich bei den Block-Copolymeren in der Regel um Gemische unterschiedlicher Polymermoleküle, die sich in der Regel in der relativen Anzahl der Polymerblöcke A und B unterscheiden.

Vorzugsweise steht A für einen im Wesentlichen cyclenfreien Polydimethylsiloxan-Block, der im Wesentlichen keine cyclischen Struktureinheiten aufweist, d.h. weniger als 10 % der Siliziumatome Bestandteil einer cyclischen Siloxaneinheit sind. Insbesondere steht A für einen linearen Polydimethylsiloxan-Block.

Insbesondere steht A für einen Polydimethylsiloxan-Block, speziell einen linearen Polydimethylsiloxan-Block, welcher ein zahlenmittleres Molekulargewicht im Bereich von 200 bis 20000 g/mol, speziell 500 bis 10000 g/mol aufweist. Das Molekulargewicht des Polydimethylsiloxan-Blocks kann in an sich bekannter Weise bestimmt werden, z.B. indirekt durch Bestimmung der relativen Anzahl der Si-gebundenen Methylgruppen mittels NMR-Spektroskopie bei bekanntem Molekulargewicht des Blockcopolymeren.

In der Regel macht der Polydimethylsiloxan-Block A 0,1 bis 70 Gew.-%, insbesondere 0,5 bis 40 Gew.-% und speziell 1 bis 30 Gew.-%, bezogen auf die Gesamtmasse des Blockcopolymeren aus

Der Polymerblock B ist erfindungsgemäß aus polymerisierten Einheiten ethylenisch ungesättigter Monomere M, insbesondere überwiegend oder vollständig aus polymerisierten Einheiten monoethylenisch ungesättigter Monomere aufgebaut. Der Anteil mehrfach ethylenisch ungesättigten Monomeren, bezogen auf die Gesamtmenge der den Polymerblock B konstituierenden Monomere M wird in der Regel 5 Gew.-% nicht überschreiten, insbesondere nicht mehr als 1 Gew.-% betragen.

Beispiele für monoethylenisch ungesättigte Monomere sind vor allem neutrale monoethylenisch ungesättigte Monomere, z.B. die Monomere der folgenden Gruppen M1 bis M11, insbesondere die Monomere der Gruppen M1, M2, M3, M6, M7, M8, M9 und M10:
- M1: Ester monoethylenisch ungesättigter C₃-C₆-Monocarbonsäuren mit C₁-C₂₀-Alkanolen, C₅-C₈-Cycloalkanolen, Phenyl-C₁-C₄-alkanolen oder Phenoxy-C₁-C₄-alkanolen, insbesondere die vorgenannten Ester der Acrylsäure sowie die vorgenanten Ester der Methacrylsäure, beispielsweise Methylacrylat, Ethylacrylat, n-Propylacrylat, Isopropylacrylat, n-Butylacrylat, 2-Butylacrylat, Isobutylacrylat, tert.-Butylacrylat, n-Hexylacrylat, 2-Ethylhexylacrylat, 3-Propylheptylacrylat, Decylacrylat, Laurylacrylat, Stearylacrylat, Cyclohexylacrylat, Benzylacrylat, 2-Phenylethylacrylat, 1-Phenylethylacrylat, 2-Phenoxyethylacrylat, sowie die Ester der Methacrylsäure wie Methylmethacrylat, Ethylmethacrylat, n-Propylmethacrylat, Isopropylmethacrylat, n-Butylmethacrylat, 2-Butylmethacrylat, Isobutylmethacrylat, tert.-Butylmethacrylat, n-Hexylmethacrylat, 2-Ethylhexylmethacrylat, Decylmethacrylat, Laurylmethacrylat, Stearylmethacrylat, Cyclohexylmethacrylat, Benzylmethacrylat, 2-Phenylethylmethacrylat, 1-Phenylethylmethacrylat und 2-Phenoxyethylmethacrylat;
- M2: vinylaromatische Kohlenwasserstoffe, wie beispielsweise Styrol, Vinyltoluole, tert.-Butylstyrol, α-Methylstyrol und dergleichen, insbesondere Styrol;
- M3: Vinyl-, Allyl- und Methallylester gesättigter aliphatischer C₂-C₁₈ Monocarbonsäuren, wie beispielsweise Vinylacetat, Vinylpropionat, Vinylbutyrat, Vinylpivalat, Vinylhexanoat, Vinyl-2-ethylhexanoat, Vinyllaurat und Vinylstearat sowie die entsprechenden Allyl- und Methallylester, und
- M4: α-Olefine mit 2 bis 20 C-Atomen und Cycloolefine mit 5 bis 10 C-Atomen wie Ethen, Propen, 1-Buten, Isobuten, 1-Penten, Cyclopenten, Cyclohexen und Cyclohepten;
- M5: Ester monoethylenisch ungesättigter C₃-C₆-Monocarbonsäuren mit Polyethermonoolen, insbesondere mit C₁-C₂₀-Alkylpoly-C₂-C₄-alkylenglykolen, speziell mit C₁-C₂₀-Alkyl-Polyethylenglykolen, wobei der Alkylpolyalkylenglykol-Rest üblicherweise ein Molekulargewicht im Bereich von 200 bis 5000 g/mol (Zahlenmittel) aufweist, insbesondere die vorgenannten Ester der Acrylsäure sowie die vorgenanten Ester der Methacrylsäure;
- M6: monethylenisch ungesättigte Nitrile wie Acrylnitril oder Methacrylnitril,
- M7: Amide der vorgenannten monoethylenisch ungesättigten C₃-C₈-Monocarbonsäuren, insbesondere Acrylamid und Methacrylamid,
- M8: N-(C₁-C₂₀-Alkyl)amide und N,N-Di-(C₁-C₂₀-alkyl)amide der vorgenannten monoethylenisch ungesättigten C₃-C₈-Monocarbonsäuren;
- M9: Hydroxyalkylester der vorgenannten monoethylenisch ungesättigten C₃-C₈-Monocarbonsäuren, z. B. Hydroxyethylacrylat, Hydroxyethylmethacrylat, 2- und 3-Hydroxypropylacrylat, 2- und 3-Hydroxypropylmethacrylat, und
- M10: N-Vinylamide aliphatischer C₁-C₁₀-Carbonsäuren und N-Vinyllactame wie N-Vinylformamid, N-Vinylacetamid, N-Vinylpyrrolidon und N-Vinylcaprolactam.

Neutrale monoethylenisch ungesättigte Monomere, z.B. die Monomere der Gruppen M1 bis M10, insbesondere die Monomere der Gruppen M1, M2, M5, M6, M7, M8 und M9 machen in der Regel wenigstens 80 Gew.-%, insbesondere wenigstens 90 Gew.-% und speziell wenigstens 95 Gew.-% oder die Gesamtmenge der den Polymerblock B konstituierenden Monomere aus.

Beispiele für monoethylenisch ungesättigte Monomere sind auch basische und kationische monoethylenisch ungesättigte Monomere, z.B. die Monomere der folgenden Gruppen M11 bis M14:
- M11: Vinylheterocyclen wie 2-Vinylpyridin, 3-Vinylpyridin, 4-Vinylpyridin und N-Vinylimidazol;
- M12: Quaternisierte Vinylheterocyclen wie 1-Methyl-2-vinylpyridiniumsalze, 1-Methyl-2-vinylpyridiniumsalze, 1-Methyl-4-vinylpyridiniumsalze, und N-Methyl-N'-vinylimidazoliumsalze, z.B. die Chloride oder Methosulfate;
- M13: N,N-(Di-C₁-C₁₀-alkylamino)-C₂-C₄-alkylamide und N,N-(Di-C₁-C₁₀-alkylamino)-C₂-C₄-alkylester der vorgenannten monoethylenisch ungesättigten C₃-C₈-Monocarbonsäuren, z.B. 2-(N,N-Dimethylamino)ethylacrylamid, 2-(N,N-Dimethylamino)ethylmethacrylamid, 2-(N,N-Dimethylamino)propylacrylamid, 2-(N,N-Dimethylamino)propylmethacrylamid, 3-(N,N-Dimethylamino)propylacrylamid, 3-(N,N-Dimethylamino)propylmethacrylamid, 2-(N,N-Diethyl-amino)ethylacrylamid, 2-(N,N-Diethylamino)ethylmethacrylamid, 2-(N,N-Diethylamino)propylacrylamid, 2-(N,N-Diethylamino)propylmethacrylamid, 3-(N,N-Diethylamino)propylacrylamid, 3-(N,N-Diethylamino)propylmethacrylamid, 2-(N,N-Dimethylamino)ethylacrylat, 2-(N,N-Dimethylamino)ethylmethacrylat, 2-(N,N-Dimethylamino)propylacrylat, 2-(N,N-Dimethylamino)propylmethacrylat, 3-(N,N-Dimethylamino)propylacrylat, 3-(N,N-Dimethylamino)propylmethacrylat, 2-(N,N-Diethylamino)ethylacrylat, 2-(N,N-Diethylamino)ethylmethacrylat, 2-(N,N-Diethylamino)propylacrylat, 2-(N,N-Diethylamino)propylmethacrylat, 3-(N,N-Diethylamino)propylacrylat und 3-(N,N-Diethylamino)propylmethacrylat;
- M14: N,N-(Tri-C₁-C₁₀-alkylammonium)-C₂-C₄-alkylamide und N,N-(Tri-C₁-C₁₀-alkylammonium)-C₂-C₄-alkylester der vorgenannten monoethylenisch ungesättigten C₃-C₈-Monocarbonsäuren, z.B. 2-(N,N,N-Trimethylammonium)ethylacrylamid, 2-(N,N,N-Trimethylammonium)ethylmethacrylamid, 2-(N,N,N-Trimethyl-ammonium)propylacrylamid, 2-(N,N,N-Trimethylammonium)propylmethacrylamid, 3-(N,N,N-Trimethylammonium)propylacrylamid, 3-(N,N,N-Trimethylammonium)-propylmethacrylamid, 2-(N,N,N-Triethylammonium)ethylacrylamid, 2-(N,N,N-Triethylammonium)ethylmethacrylamid, 2-(N,N,N-Triethylammonium)-propylacrylamid, 2-(N,N,N-Triethylammonium)propylmethacrylamid, 3-(N,N,N-Triethylammonium)propylacrylamid, 3-(N,N,N-Triethylammonium)-propylmethacrylamid, 2-(N,N,N-Trimethylammonium)ethylacrylat, 2-(N,N,N-Trimethylammonium)ethylmethacrylat, 2-(N,N,N-Trimethylammonium)propylacrylat, 2-(N,N,N-Trimethylammonium)propylmethacrylat, 3-(N,N,N-Trimethylammonium)propylacrylat, 3-(N,N,N-Trimethylammonium)propylmethacrylat, 2-(N,N,N-Triethylammonium)ethylacrylat, 2-(N,N,N-Triethylammonium)-ethylmethacrylat, 2-(N,N,N-Triethylammonium)propylacrylat, 2-(N,N,N-Triethylammonium)propylmethacrylat, 3-(N,N,N-Triethytammonium)propylacrylat und 3-(N,N,N-Triethylammonium)propylmethacrylat, insbesondere deren Chloride, Methosulfate und Ethosulfate;

Die basischen bzw. kationischen monoethylenisch ungesättigte Monomere, insbesondere die vorgenannten Monomere M11 bis M14 machen in der Regel nicht mehr als 20 Gew.-%, insbesondere nicht mehr als 10 Gew.-% und speziell nicht mehr als 5 Gew.-% der den Polymerblock B konstituierenden Monomere M aus.

Vorzugsweise ist der Polymerblock B zu wenigstens 50 Gew.-%, insbesondere zu wenigstens 70 Gew.-%, speziell zu wenigstens 80 Gew.-% ganz speziell zu wenigstens 90 Gew.-%, bezogen auf B bzw. auf die Gesamtmenge der den Polymerblock B konstituierenden Monomere M, oder vollständig aus monoethylenisch ungesättigten Monomeren aufgebaut ist, die unter Estern der Acrylsäure mit C₁-C₂₀-Alkanolen, Estern der Methacrylsäure mit C₁-C₂₀-Alkanolen, Estern der Acrylsäure mit C₅-C₂₀-Cycloalkanolen, Estern der Methacrylsäure mit C₅-C₂₀-Cycloalkanolen, Estern der Acrylsäure mit Polyethermonoolen und Estern der Methacrylsäure mit Polyethermonoolen ausgewählt sind.

Insbesondere ist der Polymerblock B zu wenigstens 50 Gew.-%, insbesondere zu wenigstens 70 Gew.-%, speziell zu wenigstens 80 Gew.-% oder zu wenigstens 90 Gew.-%, bezogen auf B bzw. auf die Gesamtmenge der den Polymerblock B konstituierenden Monomere M, oder vollständig aus monoethylenisch ungesättigten Monomeren aufgebaut ist, die unter Estern der Acrylsäure mit C₁-C₁₀-Alkanolen, Estern der Methacrylsäure mit C₁-C₁₀-Alkanolen Estern der Acrylsäure mit Polyethermonoolen und Estern der Methacrylsäure mit Polyethermonoolen ausgewählt sind.

In der Regel weist der Polymerblock B ein zahlenmittleres Molekulargewicht im Bereich von 1000 bis 50000 g/mol insbesondere 2000 bis 20000 g/mol auf. Das Molekulargewicht des Polymerblocks B kann in an sich bekannter Weise bestimmt werden, z.B. indirekt durch Bestimmung der relativen Anzahl der für den Polymerblock B charakteristischen Gruppen mittels NMR-Spektroskopie bei bekanntem Molekulargewicht des Blockcopolymeren.

In einer speziellen Ausführungsform weisen die Blöcke B der erfindungsgemäßen Block-Copolymere eine terminale Gruppe der Formel Z auf 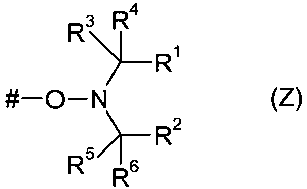 worin # die Anknüpfung an ein C-Atom des Polymerblock B bedeutet,
- R¹ und R²: unabhängig voneinander für C₁-C₂₀-Alkyl stehen, das gegebenenfalls einen unter C₁-C₄-Alkoxy und C₁-C₄-Alkoxy-C₁-C₄-alkoxy ausgewählten Substituenten trägt, oder
- R¹ und R²: gemeinsam für lineares C₂-C₁₀-Alkylen oder lineares C₂-C₁₀-Alkenylen stehen, worin gegebenenfalls eine CH₂-Gruppe durch O, C=O oder NR^{x} ersetzt sein kann, wobei lineares C₂-C₁₀-Alkylen und lineares C₂-C₁₀-Alkenylen unsubstituiert sind oder 1, 2, 3 oder 4 Substituenten aus der Gruppe C₁-C₄-Alkyl, C₁-C₄-Alkoxy, C₁-C₄-Alkoxy-C₁-C₄-alkoxy, COOH und CONH₂, aufweisen und R^{x} für C₁-C₄-Alkyl oder C₁-C₄-Alkoxy steht;
- R3, R4, R5 und R6: unabhängig voneinander für C1-C4-Alkyl stehen und insbesondere Methyl oder Ethyl bedeuten.

In Formel Z stehen vorzugsweise R¹ und R² gemeinsam für lineares C₂-C₁₀-Alkylen, worin gegebenenfalls eine oder zwei CH₂-Gruppe durch O, C=O oder NR^{x} ersetzt sein können, wobei lineares C₂-C₁₀-Alkylen unsubstituiert ist oder 1, 2, 3 oder 4 Substituenten aus der Gruppe C₁-C₄-Alkyl, C₁-C₄-Alkoxy, C₁-C₄-Alkoxy-C₁-C₄-alkoxy, COOH und CONH₂, aufweisen und R^{x} für C₁-C₄-Alkyl oder C₁-C₄-Alkoxy steht.

In Formel Z stehen insbesondere R¹ und R² gemeinsam für lineares C₂-C₄-Alkylen und speziell für 1,3-Propandiyl, worin gegebenenfalls eine oder zwei CH₂-Gruppe durch O, C(=O) oder NR^{x} ersetzt sein können, wobei lineares C₂-C₄-Alkylen bzw. 1,3-Propandiyl unsubstituiert sind oder 1, 2, 3 oder 4 Substituenten aus der Gruppe C₁-C₄-Alkyl und C₁-C₄-Alkoxy aufweisen und R^{x} für C₁-C₄-Alkyl, speziell für Methyl steht.

In der Regel macht der Polymer-Block B 20 bis 99 Gew.-%, insbesondere 50 bis 98 Gew.-% und speziell 60 bis 95 Gew.-%, bezogen auf die Gesamtmasse des Blockcopolymeren aus.

Die erfindungsgemäßen Blockcopolymere weisen vorzugsweise ein zahlenmittleres Molekulargewicht Mₙ im Bereich von 1500 bis 200000 g/mol insbesondere 2000 bis 100000 g/mol auf. Das gewichtsmittlere Molekulargewicht M_{w} der erfindungsgemäßen Blockcopolymere liegt typischerweise im Bereich von 2500 bis 30000 g/mol und insbesondere im Bereich von 3000 bis 20000 g/mol. Die Polydispersität, d.h. der Quotient M_{w}/Mₙ, liegt typischerweise im Bereich von 1 bis 2 und insbesondere im Bereich von 1,2 bis 1,6.

In Formel I steht X insbesondere für C₂-C₁₀-Alkylen oder C₂-C₁₀-Alkenylen, insbesondere für C₂-C₆-Alkylen oder C₂-C₆-Alkenylen, die unsubstituiert sind oder 1 oder 2 Substituenten aus der Gruppe OH, C₁-C₄-Alkoxy, COOH und C₁-C₄-Alkoxycarbonyl, aufweisen. C₂-C₁₀-Alkylen kann auch durch 1, 2, 3 oder 4 nicht benachbarte Sauerstoffatome unterbrochen sein. Beispiele für X sind vor allem 1,3-Propandiyl, 1,3-Butandiyl, 1,4-Butandiyl, 1,5-Pentandiyl, 3-Methyl-1,3-butandiyl, 1-Propen-1,3-diyl, 1-Buten-1,4-diyl, 2-Buten-1,2-diyl, 2-Buten-1,3-diyl, 4-Hydroxy-2-buten-1,2-diyl, 4-Hydroxy-2-buten-1,3-diyl, 3-Oxapentan-1,5-diyl, 3-Oxahexan-1,6-diyl, 3,6-Dioxaoctan-1,8-diyl, 3,7-Dioxanonan-1,9-diyl oder 3,6,9-Dioxaundecan-1,11-diyl.

Vorzugsweise steht Y in Formel I für einen bivalenten Rest der unter C₂-C₁₀-Alkylen, C₂-C₁₀-Alkenylen, C₅-C₁₀-Cycloalkylen, das gegebenenfalls 1, 2 oder 3 Methylgruppen aufweist, Phenylen, das gegebenenfalls 1, 2 oder 3 Methylgruppen aufweist, oder eine Gruppe Q-R-(Q)_{q} ausgewählt, worin q für 0 oder 1 steht und insbesondere 0 bedeutet, Q für C₅-C₁₀-Cycloalkylen insbesondere C₅-C₆-Cycloalkylen, das gegebenenfalls 1, 2 oder 3 Methylgruppen aufweist, oder Phenylen, das gegebenenfalls 1, 2 oder 3 Methylgruppen aufweist, steht und R für C₁-C₁₀-Alkylen steht und insbesondere CH₂ bedeutet.

Insbesondere steht Y in Formel I für einen bivalenten Rest der unter C₄-C₆-Alkylen, C₅-C₆-Cycloalkylen, das gegebenenfalls 1, 2 oder 3 Methylgruppen aufweist, 1,3-Phenylen, das gegebenenfalls 1, 2 oder 3 Methylgruppen aufweist, oder eine Gruppe Q-R-(Q)_{q} ausgewählt, worin Q, R und q die zuvor genannten Bedeutungen aufweisen und worin q insbesondere für 0 steht, Q für insbesondere für C₅-C₆-Cycloalkylen, das gegebenenfalls 1, 2 oder 3 Methylgruppen aufweist, steht und R insbesondere für CH₂ steht.

In Formel I steht Y häufig für einen von einem Diisocyanat abgeleiteten Rest, insbesondere von einem Diisocyanat, dessen Isocyanatgruppen unterschiedliche Reaktivität aufweisen, wie beispielsweise in Diisocyanaten, in denen eine der beiden Isocyanatgruppen an ein C-Atom eines aromatischen Rests gebunden ist, der in den beiden ortho-Position keinen weiteren Substituenten trägt, und die andere der beiden Isocyanatgruppen an ein C-Atom eines aromatischen Rests gebunden ist, der in wenigstens einer der beiden ortho-Position keinen weiteren Substituenten trägt, oder wie in Diisocyanaten, in denen eine der beiden Isocyanatgruppen an ein C-Atom eines aromatischen Rests gebunden ist und die andere der beiden Isocyanatgruppen an ein C-Atom, insbesondere an ein primäres C-Atom eines aliphatischen Rests gebunden ist, oder wie in Diisocyanaten, in denen eine der beiden Isocyanatgruppen an einen sekundäres C-Atom eines aliphatischen oder cycloaliphatischen Rests gebunden ist und die andere der beiden Isocyanatgruppen an ein primäres C-Atom aliphatischen Rests gebunden ist. Beispiele für Diisocyanate sind Toluol-2,4-diisocyanat, Toluol-2,6-diisocyanat, kommerzielle erhältliche Mischung von Toluol-2,4- und - 2,6-diisocyanat (TDI), m-Phenylendiisocyanat, 3,3'-Diphenyl-4,4'-biphenylendiisocyanat, 4,4'-Biphenylendiisocyanat, 4,4'-Diphenylmethandiisocyanat, 3,3'-Dichlor-4,4'-biphenylendiisocyanat, Cumen-2,4-diisocyanat, 1,5-Napthalindiisocyanat, p-Xylylendiisocyanat, p-Phenylendiisocyanat, 4-Methoxy-1,3-phenylendiisocyanat, 4-Chloro-1,3-phenylendiisocyanat, 4-Bromo-1,3-phenylendiisocyanat, 4-Ethoxy-1,3-phenylendiisocyanat, 2,4-Dimethyl-1,3-phenylendiisocyanat, 5,6-Dimethyl-1,3-phenylendiisocyanat, 2,4-Diisocyanatodiphenylether, Benzidindiisocyanat, 4,6-Dimethyl-1,3-phenylendiisocyanat, 9,10-Anthracendiisocyanat, 4,4'-Diisocyanatodibenzyl, 3,3'-Dimethyl-4,4'-diisocyanatodiphenylmethane, 2,6-Dimethyl-4,4'-diisocyantodiphenyl, 2,4-Diisocyanatostilben, 3,3'-Dimethoxy-4,4'-diisocyantodiphenyl, 1,4-Anthracenediisocyanat, 2,5-Fluorendiisocyanat, 1,8-Naphtalindiisocyanat, 2,6-Diisocyanatobenzofuran, als auch aliphatische und cycloaliphatische Diisocyanate wie Isophorondiisocyanat (IPDI), Ethylendiisocyanat, Ethylidendiisocyanat, Propylen-1,2-diisocyanat, Propylen-1,3-diisocyanat, 1,4-Butylendiisocyanat, 1,6-Hexylendiisocyanat (= Hexamethylendiisocyanat bzw. HDI), 1,10-Decylendiisocyanat Cyclohexylen-1,2-diisocyanat, Cyclohexylen-1,4-diisocyanat, und Methylendicyclohexyldiisocyanat.

Beispiele für Diisocyanate, deren Isocyanatgruppen sich in ihrer Reaktivität unterscheiden, sind Toluol-2,4-diisocyanat, Toluol-2,6-diisocyanat, sowie Mischung von Toluol-2,4- und -2,6-diisocyanat und cis- und trans-Isophorondiisocyanat.

Speziell steht Y für einen bivalenten Rest der Formel Ya, worin r für 0, 1, 2, 3 oder 4 und insbesondere für 1 oder 2 steht und R für C₁-C₄-Alkyl und insbesondere für Methyl steht. Speziell steht Y für einen Rest der Formel Yb:

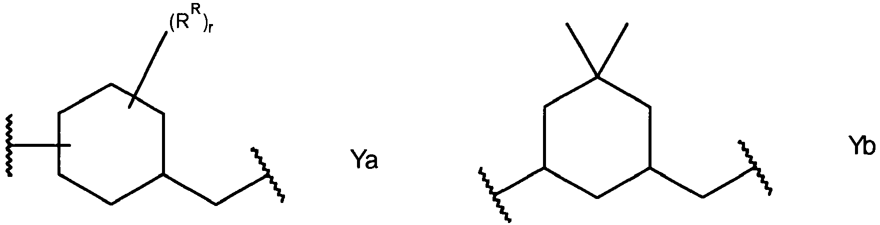

Vorzugsweise steht M in Formel I für eine chemische Bindung oder für C₂-C₈-Alkylen, das gegebenenfalls durch eine Gruppe, ausgewählt unter O, C(=O)O und (C=O)NH unterbrochen sein kann, z.B. für einen Rest der Formel Ma:

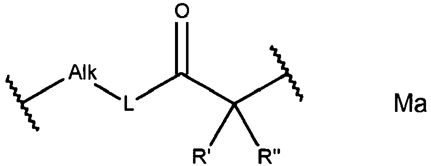

In Formel Ma steht Alk für lineares oder verzweigtes C₁-C₄alkylen. L bedeutet O oder NH, R und R' bedeuten unabhängig voneinander Wasserstoff oder C₁-C₄-Alkyl, insbesondere H oder Methyl, wobei die Gesamtzahl der Kohlenstoffatome in Alk, R' und R" im Bereich von 2 bis 8 liegt. Insbesondere steht M für eine Gruppe Ma.

Die Herstellung der erfindungsgemäßen Blockcopolymere kann in Analogie üblichen Verfahren der Herstellung von Blockcopolymeren erfolgen. Die beiden im Folgenden beschriebenen Verfahren der ersten und zweiten bevorzugten Ausführungsform haben sich jedoch als besonders geeignet erwiesen, wobei das Verfahren der ersten Ausführungsform besonders bevorzugt ist. Derartige Verfahren sind ebenfalls Gegenstand der vorliegenden Erfindung.

Die Herstellung der erfindungsgemäßen Blockcopolymere umfasst nach einer ersten bevorzugten Ausführungsform die folgenden Schritte:
i) Bereitstellung eines OH-funktionalisierten Poly(dimethylsiloxan) der Formel A[X(-OH)ₖ]ₙ, worin A, X, k und n die zuvor angegebenen Bedeutungen und insbesondere die als bevorzugt, insbesondere oder speziell angegebenen Bedeutungen aufweisen,
ii) Bereitstellung eines OH-funktionalisierten, aus ethylenisch ungesättigten Monomeren aufgebauten Polymers B-M-OH steht, worin B und M die zuvor angegebenen Bedeutungen und insbesondere die als bevorzugt, insbesondere oder speziell angegebenen Bedeutungen aufweisen;
iii) Umsetzung des OH-funktionalisierten, aus ethylenisch ungesättigten Monomeren aufgebauten Polymers B-M-OH mit einem Diisocyanat der Formel II

   O=C=N-Y-N=C=O (II)

   wobei man ein Isocyanat-funktionalisiertes Polymer der Formel III erhält:

   O=C=N-Y-NH-C(O)-O-M-B (III)

   worin Y in den Formeln II und III die zuvor angegebenen Bedeutungen und insbesondere die als bevorzugt, insbesondere oder speziell angegebenen Bedeutungen aufweisen;
iv) Umsetzung des Isocyanat-funktionalisierten Polymers der Formel III mit dem in Schritt i) bereitgestellten OH-funktionalisierten Poly(dimethylsiloxan) der Formel A[X(-OH)ₖ]ₙ.

Die Herstellung der erfindungsgemäßen Blockcopolymere umfasst nach einer zweiten bevorzugten Ausführungsform die folgenden Schritte:
i) Bereitstellung eines OH-funktionalisierten Poly(dimethylsiloxan) der Formel A[X(-OH)ₖ]ₙ, worin A, X, k und n die zuvor angegebenen Bedeutungen und insbesondere die als bevorzugt, insbesondere oder speziell angegebenen Bedeutungen aufweisen,
ii) Bereitstellung eines OH-funktionalisierten, aus ethylenisch ungesättigten Monomeren aufgebauten Polymers B-M-OH steht, worin B und M die zuvor angegebenen Bedeutungen und insbesondere die als bevorzugt, insbesondere oder speziell angegebenen Bedeutungen aufweisen;
iii) Umsetzung des in Schritt i) bereitgestellten OH-funktionalisierten Poly(dimethylsiloxans) der Formel A[X(-OH)ₖ]ₙ mit einem Diisocyanat der Formel II

   O=C=N-Y-N=C=O (II)

   wobei man ein Isocyanat-funktionalisiertes Polydimethylsiloxan der Formel IV erhält:

   [(O=C=N-Y-NH-C(O)-O)ₖ-X]ₙ-A (IV)

   worin Y in den Formeln II und IV die in zuvor angegebenen Bedeutungen aufweist und A, X, k und n in Formel IV die zuvor angegebenen Bedeutungen aufweisen;
iv) Umsetzung des Isocyanat-funktionalisierten Polymers der Formel III mit dem in Schritt ii) bereitgestellten OH-funktionalisierten, aus ethylenisch ungesättigten Monomeren aufgebauten Polymeren B-M-OH.

Gemäß Schritt i) der erfindungsgemäßen Verfahren stellt man ein OH-funktionalisiertes Poly(dimethylsiloxan) der Formel A[X(-OH)ₖ]ₙ bereit. OH-funktionalisierte Poly(dimethylsiloxane) der Formel A[X(-OH)ₖ]ₙ sind teilweise bekannt oder sogar kommerziell erhältlich, z.B. die Silaplane® FM04 Produkte der Fa. Chisso Corporation, z.B. Silaplane® FM0411, Silaplane® FM0421 oder Silaplane® FM0425, die Silaplane® DA Produkte der Fa. Chisso Corporation, z.B. Silaplane® DA11, Silaplane® DA21 und Silaplane® DA26.

Die OH-funktionalisierten Poly(dimethylsiloxane) der Formel A[X(-OH)ₖ]ₙ können auch in an sich bekannter Weise durch Funktionalisierung entsprechender Si-H Gruppen aufweisender Poly(dimethylsiloxane) der Formel A(-H)ₙ hergestellt werden, wobei A und n die zuvor genannten Bedeutungen haben und n der Anzahl an Si-H-Gruppen im Poly(dimethylsiloxane) der Formel A(-H)ₙ entspricht.

Die OH-Funktionalisierung der Poly(dimethylsiloxane) der Formel A(-H)ₙ gelingt beispielsweise durch Umsetzung von Poly(dimethylsiloxane) der Formel A(-H)ₙ mit olefinisch oder acetylenisch ungesättigten Verbindungen, die k Hydroxylgruppen tragen, wobei k für 1 oder 2 steht. Beispiele für derartige Verbindungen sind Allylalkohol (Prop-2-en-1-ol), Propargylalkohol (Prop-2-in-1-ol), 1,4-Butindiol (But-2-in-1,4-diol), 5-Hexenol, Ethylenglykolmonoallylether, Propylenglykolmonoallylether, Ethylenglykolmonopropinylether, Propylenglykolmonopropinylether, Monoallyl- oder Monovinylterminiertes Diethylenglykol oder Triethylenglykol sowie Monopropinyl-terminiertes Diethylenglykol oder Triethylenglykol. Die Umsetzung von Poly(dimethylsiloxane) der Formel A(-H)ₙ mit olefinisch oder acetylenisch ungesättigten Verbindungen, die k Hydroxylgruppen tragen gelingt in Analogie zu literaturbekannten Verfahren, wie sie z.B. aus DE 2646726, EP 75703, US 3775452, EP 1520870 und der dort zitierten Literatur (siehe Absatz 0003 der EP 1520870 A1) beschrieben werden, beispielsweise durch Umsetzung der Reaktanden in einem aprotischen Lösungsmittel in Gegenwart von katalytischen Mengen an Übergangsmetallverbindungen, insbesondere Ruthenium-, Palladium- oder insbesondere Platinverbindungen wie Hexachloroplatinsäure.

Poly(dimethylsiloxane) der Formel A(-H)ₙ sind aus der Literatur bekannt (siehe z.B. EP 1520870 und dort zitierte Literatur) und kommerziell erhältlich, z.B. unter der Typenbezeichnung BAYSILONE MH-xx, z. B. BAYSILONE MH15, oder Dow Corning® 1107 Fluid oder können nach literaturbekannten Verfahren durch Equilibrierung von cyclischen oder linearen Oligo bzw. Polydimethylsiloxanen hergestellt werden, wobei ein Teil der zur Equilibrierung eingesetzten Oligo bzw. Polydimethylsiloxanen SiH-Gruppen aufweisen muss (siehe z.B. WO 96/18670). Typischerweise erfolgt die Equilibrierung unter Säurekatalyse, z.B. mit Trifluormethansulfonsäure. Beispiele für zur Oligomerisierung eingesetzte Oligo bzw. Polydimethylsiloxanen sind Tetramethyldisiloxan Hexamethyldisiloxan, Heptamethyltrisiloxan, Cyclotetradimethylsiloxan (= Octamethylcyclotetrasiloxan), Cyclopentadimethylsiloxan und Cyclohexadimethylsiloxan und Gemische davon.

Die Bereitstellung eines OH-funktionalisierten, aus ethylenisch ungesättigten Monomeren aufgebauten Polymers B-M-OH gelingt durch radikalische Polymerisation, insbesondere durch kontrollierte radikalische Polymerisation der den Polymerblock konstituierenden ethylenisch ungesättigten Monomere in Gegenwart eines OH-funktionalisierten Reglers bzw. Mediators.

Unter einer kontrollierten bzw. lebenden radikalischen Polymerisation versteht man eine Polymerisation, bei der die Radikale an den Kettenenden der wachsenden Polymerkette, anders als bei einer konventionellen radikalischen Polymerisation, nicht als freie Radikale permanent vorliegen, sondern durch Dissoziations-/Rekombinationsprozesse im Gleichgewicht mit einer nicht radikalischen Form vorliegen und unter Polymerisationsbedingungen stets neu gebildet werden. Verfahren zur kontrollierten Radikalischen Polymerisation sind bekannt z.B. aus "Controlled/Living radical polymerization: Progress in ATRP, NMP, and RAFT" (Matyjaszewski, K.), Washington, DC: American Chemical Society, 2000 und er dort zitierten Literatur.

Die Herstellung des Polymers B-M-OH durch radikalische Polymerisation kann nach üblichen Polymerisationstechniken erfolgen, beispielsweise durch Polymerisation in Bulk, in Lösung, durch Emulsionspolymerisation oder Suspensionspolymerisation. Eine bevorzugte Methode zur Bereitstellung eines OH-funktionalisierten, aus ethylenisch ungesättigten Monomeren aufgebauten Polymers B-M-OH ist die kontrollierte radikalische Polymerisation nach der NMP-Methode (Nitroxid-mediierte Polymerisation). Dieses Verfahren ist aus der Literatur bekannt, beispielsweise aus P. Nesvadba, Chimia 60 (2006) 832-840 und dort zitierte Literatur [60] bis [70] sowie aus WO 98/44008, WO 00/07981 und WO 01/90113.

Bei einer kontrollierten radikalischen Polymerisation nach der NMP-Methode polymerisiert man die zu polymerisierenden Monomere typischerweise in Gegenwart einer Verbindung HO-M'-Z, d.h. einer Verbindung der Formel V 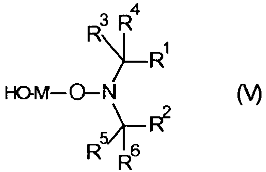 worin R¹, R², R³, R⁴, R⁵ und R⁶ die zuvor für Formel Z genannten Bedeutungen aufweisen. In Formel V weist M' eine der zuvor für M in Formel I genannten, von einer chemischen Bindung verschiedenen Bedeutungen auf.

In Formel V stehen vorzugsweise R¹ und R² gemeinsam für lineares C₂-C₁₀-Alkylen, worin gegebenenfalls eine CH₂-Gruppe durch O, C=O oder NR^{x} ersetzt sein kann, wobei lineares C₂-C₁₀-Alkylen unsubstituiert ist oder 1, 2, 3 oder 4 Substituenten aus der Gruppe C₁-C₄-Alkyl, C₁-C₄-Alkoxy, C₁-C₄-Alkoxy-C₁-C₄-alkoxy, COOH und CONH₂, aufweisen und R^{x} für C₁-C₄-Alkyl oder C₁-C₄-Alkoxy steht.

In Formel V stehen insbesondere R¹ und R² gemeinsam für lineares C₂-C₄-Alkylen und speziell für 1,3-Propandiyl, worin gegebenenfalls eine CH₂-Gruppe durch O, C(=O) oder NR^{x} ersetzt sein kann, wobei lineares C₂-C₄-Alkylen bzw. 1,3-Propandiyl unsubstituiert sind oder 1, 2, 3 oder 4 Substituenten aus der Gruppe C₁-C₄-Alkyl und C₁-C₄-Alkoxy aufweisen und R^{x} für C₁-C₄-Alkyl, speziell für Methyl steht.

In Formel V stehen R³, R⁴, R⁵ und R⁶ unabhängig voneinander insbesondere für Methyl oder Ethyl.

Vorzugsweise steht M' in Formel V für C₂-C₈-Alkylen, das gegebenenfalls durch eine Gruppe, ausgewählt unter O, C(=O)O und (C=O)NH unterbrochen sein kann, z.B. für einen Rest der Formel Ma':

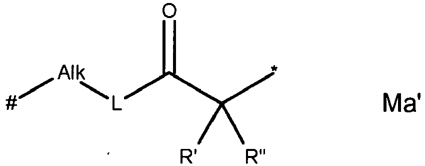

In Formel Ma' steht Alk für lineares oder verzweigtes C₁-C₄alkylen. L bedeutet O oder NH, R und R' bedeuten unabhängig voneinander Wasserstoff oder C₁-C₄-Alkyl, insbesondere H oder Methyl, wobei die Gesamtzahl der Kohlenstoffatome in Alk, R' und R" im Bereich von 2 bis 8 liegt. Insbesondere steht M' für eine Gruppe Ma'. Der Index * steht für die Anknüpfungspunkt an das Stickstoffatom von Z und der Index # für den Anknüpfungspunkt an das Sauerstoffatom der Hydroxylgruppe.

Zur Polymerisation nach der NMP-Methode wird man die zu polymerisierenden Monomere in Gegenwart einer Verbindung der Formel IV polymerisieren. Hierzu wird man in der Regel eine Mischung, welche wenigstens einen Teil, vorzugweise wenigsten 50 % der zu polymerisierenden Monomere und wenigstens eine Verbindung der Formel V enthält auf die zur Polymerisation erforderliche Temperatur erwärmen. Eine gegebenenfalls vorhandene Restmenge der Monomere wird man dann unter Polymerisationsbedingungen der Polymerisation zuführen.

Die Menge an Verbindung der Formel V liegt typischerweise im Bereich von 0,1 bis 20 Gew.-% und insbesondere im Bereich von 1 bis 10 Gew.-%, bezogen auf die zu polymerisierenden Monomere.

Die Polymerisation nach der NMP-Methode erfolgt typischerweise in Bulk oder in einem Lösungsmittel oder Lösungsmittelgemisch. Beispiele für Lösungsmittel sind vor allem sauerstoffhaltige organische Lösungsmittel, z.B.
L.1 aliphatische und cycloaliphatische Alkohole wie Methanol, Ethanol, Ethylenglykol, Diethylenglykol, Propylenglykol, Ethylenglykolmonomethylether, Ethylenglykolmonoethylether und Ethylenglykolmonobutylether;
L.2 Alkylester aliphatischer Mono- und Dicarbonsäuren wie Ethyl-, Propyl, Butyl oder Hexylacetat, Ethylenglykolmonomethylether-Acetat, EthylenglykolmonoethyletherAcetat und Ethylenglykolmonobutylether-Acetat,
L.3 aliphatische und alicyclische Ether wie Diethylether, Dibutylether, Methyl-tert.-butylether, Ethyl-tert.-butylether, Ethylenglykoldimethylether, Ethylenglykoldiethylether, Tetrahydrofuran und Dioxan,
L.4 aliphatische und alicyclische Ketone wie Aceton, Methylethylketon und Cyclohexanon;
L.5 N,N-Dialkylamide aliphatischer Carbonsäuren und N-Alkyllactame wie N,N-Dimethylformamid, N,N-Dimethylacetamid und N-Methylpyrrolidon; und
L.6 aromatische organische Lösungsmittel wie Benzol, Toluol oder Xylole, sowie Mischungen der vorgenannten organischen Lösungsmittel.

Insbesondere erfolgt die Polymerisation nach der NMP-Methode in einem organischen Lösungsmittel oder Lösungsmittelgemisch.

Die Polymerisationstemperatur für die NMP-Methode liegt typischerweise im Bereich von 50 bis 180°C und insbesondere im Bereich von 80 bis 150°C und kann vom Fachmann durch Routineversuche ermittelt werden. Der Polymerisationsdruck ist von untergeordneter Bedeutung und kann im Bereich von Normaldruck oder leichtem Unterdruck, z. B. > 800 mbar, oder bei Überdruck, z. B. bis 10 bar, liegen, wobei höhere oder niedrigere Drücke ebenfalls angewendet werden können. Die Polymerisationsdauer wird in der Regel 10 Stunden nicht überschreiten und liegt häufig im Bereich von 1 bis 8 Stunden.

Die Herstellung der Polymere B-M-OH kann in den für eine radikalische Polymerisation üblichen Reaktoren durchgeführt werden, beispielsweise Rührkesseln, insbesondere solchen mit wandgängigen Rührern, einschließlich Rührkesselkaskaden sowie Rohrreaktoren, die gegebenenfalls dynamische und/oder statische Mischelemente aufweisen können. Die Reaktoren weisen in der Regel eine oder mehrere Vorrichtungen zur Zuführung der Edukte und Vorrichtungen zur Entnahme der Produkte sowie gegebenenfalls Mittel zur Zufuhr und zur Abfuhr der Reaktionswärme sowie gegebenenfalls Mittel zur Steuerung und/oder Kontrolle der Reaktionsparameter Druck, Temperatur, Umsatz etc. auf. Die Reaktoren können absatzweise oder kontinuierlich betrieben werden.

Nach Beendigung der Polymerisation kann man das Polymerisationsgemisch in üblicher Weise aufarbeiten. Flüchtige Komponenten, beispielsweise Lösungsmittel, lassen sich durch destillative Maßnahmen abtrennen. Im Falle einer Lösungspolymerisation kann man auch eine Fällung des erhaltenen Polymerisats B-M-OH herbeiführen, beispielsweise durch Zugabe eines organischen Lösungsmittels, in welchem das Polymerisat nicht löslich ist. Gegebenenfalls kann man im Anschluss an die Polymerisation auch einen Lösungsmittelaustausch durchführen, z. B. um das Polymer B-M-OH in eine Lösung zu überführen, die in den Folgeschritten iii) bzw. iv) eingesetzt werden kann. Vorzugsweise führt man die Herstellung der Polymere B-M-OH in einem organischen Lösungsmittel durch, das auch für die Folgeschritte iii) bzw. iv) geeignet ist, so dass auf eine Isolierung des Polymers verzichtet werden kann.

Gemäß einer ersten Ausführungsform des erfindungsgemäßen Verfahrens wird das in Schritt ii) bereitgestellte Polymer B-M-OH mit einem Diisocyanat der Formel II umgesetzt

O=C=N-Y-N=C=O (II),

wobei man ein Isocyanat-funktionalisiertes Polymer der Formel III erhält:

O=C=N-Y-NH-C(O)-O-M-B (III)

Geeignete Diisocyanate sind die zuvor in Zusammenhang mit der Definition von Y genannten Diisocyanate, insbesondere solche, deren Isocyanatgruppen unterschiedliche Reaktivität aufweisen. Besonders geeignet sind Diisocyanate der Allgemeinen Formel IIa 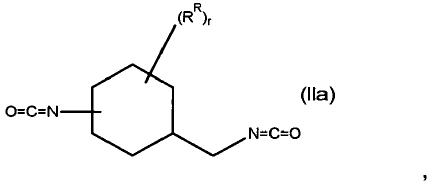 worin r für 0, 1, 2, 3 oder 4 und insbesondere für 1 oder 2 steht und R für C₁-C₄-Alkyl und insbesondere für Methyl steht, und speziell für Isophorondiisocyanat.

In der Regel wird man zu diesem Zweck das Polymer B-M-OH mit dem Diisocyanat der Formel II in Gegenwart eines geeigneten Urethanisierungskatalsysators umsetzen. Zur Vermeidung der Bildung von multimeren Addukten, d. h. Addukte, in denen zwei Polymere B-M-OH über Diisocyanateinheiten miteinander verknüpft sind, kann es von Vorteil sein, das Diisocyanat in geringem Überschuss einzusetzen. In der Regel beträgt jedoch der Überschuss nicht mehr als 10 Mol-%, bezogen auf die Stöchiometrie der Reaktion, d. h. man setzt höchstens 1,1 Mol pro Mol Polymer B ein. Insbesondere setzt man das Diisocyanat und das Polymer B-M-OH in einem Molverhältnis im Bereich von 1:1,1 bis 1,1:1 ein.

Vorzugsweise erfolgt die Umsetzung des Polymeren B-M-OH mit dem Diisocyanat in einem geeigneten Lösungs- oder Verdünnungsmittel. Geeignete Lösungs- bzw. Verdünnungsmittel sind aprotische organische Lösungsmittel, z.B. die zuvor genannten organischen Lösungsmittel der Gruppen L.2, L.3, L.4, L.5 und L.6.

In der Regel erfolgt die Umsetzung des Polymeren B-M-OH mit dem Diisocyanat in Abwesenheit von Feuchtigkeit (< 2000 ppm, vorzugsweise < 500 ppm).

Die Umsetzung kann in Abwesenheit oder in Gegenwart geringer Mengen üblicher Katalysatoren, welche die Bildung von Urethanen fördern, erfolgen. Geeignete Urethanisierungskatalysatoren sind beispielsweise tertiäre Amine wie Diazabicyclooctan (DA-BCO) und zinnorganische Verbindungen, z. B. Dialkylzinn(IV)salze von aliphatischen Carbonsäuren wie Dibutylzinndilaurat und Dibutylzinndioctoat. Die Menge an Katalysator beträgt in der Regel nicht mehr als 0,5 Gew.-%, insbesondere nicht mehr als 0,1 Gew.-%, bezogen auf das Polymer B-M-OH, z. B. 0,001 bis 0,5 Gew.-%, insbesondere 0,005 bis 0,1 Gew.-%.

Die erforderlichen Reaktionstemperaturen hängen naturgemäß von der Reaktivität des eingesetzten Polymers B-M-OH, des Diisocyanats, und sofern eingesetzt von der Art und Menge des verwendeten Katalysators ab. Sie liegt in der Regel im Bereich von 20 bis 100°C und insbesondere im Bereich von 35 bis 80°C.

Die Aufarbeitung der so erhaltenen Reaktionsmischung kann, sofern erwünscht, beispielsweise durch Abdestillieren von Lösungsmittel und ggf. überschüssigem Diisocyanat, vorzugsweise bei vermindertem Druck erfolgen. Die erhaltenen Reaktionsprodukte enthalten einen sehr hohen Anteil an Polymer der Formel III. Der Anteil an Polymer der Formel III beträgt in der Regel wenigstens 80 Gew.-%, vorzugsweise wenigstens 90 Gew.-% des Reaktionsprodukts. In der Regel wird man jedoch auf eine Aufarbeitung verzichten und das Umsetzungsprodukt unmittelbar mit dem in Schritt i) bereitgestellten OH-funktionalisierten Poly(dimethylsiloxan) der Formel A[X(-OH)ₖ]ₙ umsetzen.

Gemäß einer zweiten Ausführungsform des erfindungsgemäßen Verfahrens wird das in Schritt i) bereitgestellte Polymer A[X(-OH)ₖ]ₙ mit einem Diisocyanat der Formel II, wie zuvor definiert, umgesetzt, wobei man ein Isocyanat-funktionalisiertes Polymer der Formel IV erhält:

[(O=C=N-Y-NH-C(O)-O)ₖ-X]ₙ-A (IV)

worin Y in den Formeln II und IV die in zuvor angegebenen Bedeutungen aufweist und A, X, k und n in Formel IV die zuvor angegebenen Bedeutungen aufweisen.

Geeignete Diisocyanate sind die zuvor in Zusammenhang mit der Definition von Y bzw. in Zusammenhang mit Schritt iii) der ersten Ausführungsform genannten Diisocyanate, insbesondere solche, deren Isocyanatgruppen unterschiedliche Reaktivität aufweisen. Besonders geeignet sind Diisocyanate der allgemeinen Formel IIa, wie zuvor definiert, und speziell Isophorondiisocyanat.

In der Regel wird man zu diesem Zweck das Polymer A[X(-OH)ₖ]ₙ mit dem Diisocyanat der Formel II in Gegenwart eines geeigneten Urethanisierungskatalsysators umsetzen. Zur Vermeidung der Bildung von multimeren Addukten, d. h. Addukte, in denen zwei Polymere A[X(-OH)ₖ]ₙ über Diisocyanateinheiten miteinander verknüpft sind, kann es von Vorteil sein, das Diisocyanat in geringem Überschuss, bezogen auf die OH-Gruppen in A[X(-OH)ₖ]ₙ einzusetzen. In der Regel beträgt jedoch der Überschuss nicht mehr als 10 Mol-%, bezogen auf die Stöchiometrie der Reaktion, d. h. man setzt höchstens 1,1 Mol pro Mol OH-Gruppen im OH-funktionalisierten Polydimethylsiloxan A[X(-OH)ₖ]ₙ ein. Insbesondere setzt man das Diisocyanat und das OH-funktionalisierte Polydimethylsiloxan in einem Mengenverhältnis ein, dass das Molverhältnis von Diisocyanat zu OH-Gruppen im Bereich von 1:1,1 bis 1,1:1 liegt.

Vorzugsweise erfolgt die Umsetzung des OH-funktionalisierten Polydimethylsiloxans A[X(-OH)ₖ]ₙ mit dem Diisocyanat in einem geeigneten Lösungs- oder Verdünnungsmittel. Geeignete Lösungs- bzw. Verdünnungsmittel sind aprotische organische Lösungsmittel, z.B. die zuvor genannten organischen Lösungsmittel der Gruppen L.2, L.3, L.4, L.5 und L.6.

In der Regel erfolgt die Umsetzung des OH-funktionalisierten Polydimethylsiloxans A[X(-OH)ₖ]ₙ mit dem Diisocyanat in Abwesenheit von Feuchtigkeit (< 2000 ppm, vorzugsweise < 500 ppm).

Die Umsetzung kann in Abwesenheit oder in Gegenwart geringer Mengen üblicher Katalysatoren, welche die Bildung von Urethanen fördern, erfolgen. Geeignete Urethanisierungskatalysatoren sind beispielsweise tertiäre Amine wie Diazabicyclooctan (DA-BCO) und zinnorganische Verbindungen, z. B. Dialkylzinn(IV)salze von aliphatischen Carbonsäuren wie Dibutylzinndilaurat und Dibutylzinndioctoat. Die Menge an Katalysator beträgt in der Regel nicht mehr als 0,5 Gew.-%, insbesondere nicht mehr als 0,1 Gew.-%, bezogen auf das OH-funktionalisierte Polydimethylsiloxan A[X(-OH)ₖ]ₙ, z. B. 0,001 bis 0,5 Gew.-%, insbesondere 0,005 bis 0,1 Gew.-%.

Die erforderlichen Reaktionstemperaturen hängen naturgemäß von der Reaktivität des eingesetzten OH-funktionalisierten Polydimethylsiloxans, des Diisocyanats, und sofern eingesetzt von der Art und Menge des verwendeten Katalysators ab. Sie liegt in der Regel im Bereich von 20 bis 100°C und insbesondere im Bereich von 35 bis 80°C.

Die Aufarbeitung der so erhaltenen Reaktionsmischung kann, sofern erwünscht, beispielsweise durch Abdestillieren von Lösungsmittel und ggf. überschüssigem Diisocyanat, vorzugsweise bei vermindertem Druck erfolgen. Die erhaltenen Reaktionsprodukte enthalten einen sehr hohen Anteil des Isocyanat funktionalisierten Polydimethylsiloxans der Formel IV. Der Anteil an Polymer der Formel IV beträgt in der Regel wenigstens 80 Gew.-%, vorzugsweise wenigstens 90 Gew.-% des Reaktionsprodukts. In der Regel wird man jedoch auf eine Aufarbeitung verzichten und das Umsetzungsprodukt unmittelbar mit dem in Schritt ii) bereitgestellten OH-funktionalisierten Polymeren B-M-OH umsetzen.

Die Umsetzung des in Schritt iii) der ersten Ausführungsform hergestellten Isocyanatfunktionalisierten Polymeren der Formel III mit dem in Schritt i) bereitgestellten OH-funktionalisierte Polydimethylsiloxan A[X(-OH)ₖ]ₙ, bzw. die Umsetzung des in Schritt iii) der zweiten Ausführungsform hergestellten Isocyanat-funktionalisierten Poly(dimethylsiloxans) der Formel IV mit dem in Schritt ii) bereitgestellten OH-funktionalisierten Polymeren B-M-OH gelingt jeweils in Analogie zu den für Schritt iii) angegebenen Reaktionsbedingungen auf die hiermit verwiesen wird. Insbesondere wird man in Schritt iv) der beiden erfindungsgemäßen Ausführungsformen die in Schritt iii) erhaltenen Reaktionsgemische, die noch aktiven Katalysator enthalten, einsetzen, so dass weitere Katalysatorzusatz nicht erforderlich ist.

In der Regel wird man zu diesem Zweck das OH-funktionalisierte Polydimethylsiloxan A[X(-OH)ₖ]ₙ mit dem Isocyanat-funktionalisierten Polymeren der Formel III bzw. das das OH-funktionalisierte Polymer B-M-OH mit dem Isocyanat-funktionalisierten Dimethylsiloxan der Formel IV in Gegenwart eines geeigneten Urethanisierungskatalysators umsetzen. Zur Erzielung eines vollständigen Umsatzes der Isocyanat-Gruppen in III bzw. IV wird man das jeweils komplementäre OH-funktionalisierte Polymer B-M-OH bzw. A[X(-OH)ₖ]ₙ in einer Menge einsetzen, dass die im Reaktionsgemisch vorhandenen OH-Gruppen im Überschuss bezogen auf die im Reaktionsgemisch vorhandenen Isocyanatgruppen vorliegen. In der Regel beträgt jedoch der Überschuss nicht mehr als 50 Mol-%, bezogen auf die Stöchiometrie der Reaktion, d. h. das Molverhältnis von OH-Gruppen in B-M-OH bzw. A[X(-OH)ₖ]ₙ zu den Isocyanatgruppen in den Isocyanat-funktionalisierten Polymeren der Formel III bzw. IV wird vorzugsweise einen Wert 1,5 Mol OH pro Mol NCO nicht überschreiten. Insbesondere liegt das Molverhältnis von OH-Gruppen zu Isocyanat-Gruppen im Bereich von 1:1,1 bis 1,5:1.

Vorzugsweise erfolgt die Umsetzung in Schritt iv) in einem geeigneten Lösungs- oder Verdünnungsmittel. Geeignete Lösungs- bzw. Verdünnungsmittel sind aprotische organische Lösungsmittel, z.B. die zuvor genannten organischen Lösungsmittel der Gruppen L.2, L.3, L.4, L.5 und L.6. In der Regel erfolgt die Umsetzung in Schritt iv) in Abwesenheit von Feuchtigkeit (< 2000 ppm, vorzugsweise < 500 ppm).

Die für Schritt iv) erforderlichen Reaktionstemperaturen hängen naturgemäß von der Reaktivität des eingesetzten OH-funktionalisierten Polydimethylsiloxans bzw. des Polymeren B-M-OH, der Isocyanat-funktionalisierten Polymere der Formeln III bzw. IV, und sofern eingesetzt von der Art und Menge des verwendeten Katalysators ab. Sie liegt in der Regel im Bereich von 20 bis 100°C und insbesondere im Bereich von 35 bis 80°C.

Die Aufarbeitung der in Schritt iv) erhaltenen Reaktionsmischung kann, gegebenenfalls nach Deaktivieren des Katalysators, beispielsweise durch Abdestillieren von Lösungsmittel, vorzugsweise bei vermindertem Druck, erfolgen.

Die erhaltenen Polymerzusammensetzungen weisen einen sehr hohen Anteil des erfindungsgemäßen Blockcopolymeren der Formel I auf. Der Anteil an Blockcopolymer der Formel I beträgt in der Regel wenigstens 50 Gew.-%, vorzugsweise wenigstens 70 Gew.-%, bezogen auf die Gesamtmenge der polymeren Bestandteile des Reaktionsprodukts.

Dementsprechend betrifft die vorliegende Erfindung auch eine Polymerzusammensetzung, die wenigstens ein Blockcopolymer der Formel I enthält und die insbesondere wenigstens 50 Gew.-%, speziell wenigstens 70 Gew.-%, bezogen auf das Gesamtgewicht der Polymerzusammensetzung wenigstens ein Blockcopolymer der Formel I enthält. Die vorliegende Erfindung betrifft insbesondere auch eine solche Polymerzusammensetzung, die erhältlich ist durch ein Verfahren gemäß einer der beiden Ausführungsformen des erfindungsgemäßen Verfahrens.

Wie bereits einleitend erwähnt, eignen sich die erfindungsgemäßen Blockcopolymere der Formel I sowie die erfindungsgemäßen Polymerzusammensetzungen, die wenigstens ein Blockcopolymer der Formel I, insbesondere in einer Menge von wenigstens 50 Gew.-%, speziell in einer Menge von wenigstens 70 Gew.-%, bezogen auf das Gesamtgewicht der Polymerzusammensetzung, enthalten, als Additive in Beschichtungsmittelformulierungen, insbesondere in flüssigen Beschichtungsmittelformulierungen, die wenigstens ein organisches Bindemittel enthalten.

In derartigen Beschichtungsmittelformulierungen wirken die erfindungsgemäßen Block-copolymere der Formel I als Additive, welche die gleichmäßige Ausbreitung der Beschichtungszusammensetzung auf der zu beschichtenden Substratoberfläche fördern und daher zu glatteren Beschichtungen führen als unadditivierte Beschichtungsmittelformulierungen. Zudem verleihen die erfindungsgemäßen Blockcopolymere der Formel I bzw. die sie enthaltenden Polymerzusammensetzungen derartigen Beschichtungen eine verbesserte schmutzabweisende Wirkung, insbesondere eine hydrophobierende Wirkung und eignen sich daher zur Verringerung der Anschmutzneigung von Beschichtungen sowie als hydrophobierendes Antigraffiti-Additiv.

Dementsprechend betrifft die Erfindung auch die Verwendung der erfindungsgemäßen Blockcopolymere der Formel I bzw. der sie enthaltenden Polymerzusammensetzungen als Additive in Beschichtungsmitteln, welche wenigstens ein organisches Bindemittel enthalten.

Die vorliegende Erfindung betrifft insbesondere auch die Verwendung der erfindungsgemäßen Blockcopolymere der Formel I bzw. der sie enthaltenden Polymerzusammensetzungen als Verlaufshilfsmittel in Beschichtungsmitteln, welche wenigstens ein organisches Bindemittel enthalten.

Die vorliegende Erfindung betrifft weiterhin auch die Verwendung der erfindungsgemäßen Blockcopolymere der Formel I bzw. der sie enthaltenden Polymerzusammensetzungen als schmutzabweisendes Additiv, insbesondere als hydrophobierendes Anti-Graffiti-Mittel, in Beschichtungsmitteln, welche wenigstens ein organisches Bindemittel enthalten.

Die erfindungsgemäßen Vorteile kommen vor allem dann zum Tragen, wenn es sich bei dem organischen Bindemittel um ein Bindemittel handelt, welches nach Applikation aushärtet. Hierzu zählen vor allem
- Formulierungen, die als organisches Bindemittel ein thermisch härtendes Bindemittel enthalten, wie beispielsweise Epoxid-Formulierungen, z.B. Mischungen von Epoxidharzen mit aminischen Härtern, Epoxid-Phenolharz-Mischungen und Polyester-Melamin-Epoxidharz-Formulierungen, Melaminharz-Formulierungen, z.B. Alkyd-Melaminharz-Formulierungen, Polyester-Melaminharz-Formulierungen, Polyester-Melaminharz-Formulierungen mit Isocyanat-Härtern, und Acrylat-Melaminharz-Formulierungen, sowie Phenolharz-Formulierungen
- Polyurethan-2K-Formulierungen,
- Epoxid-2K-Formulierungen,
- strahlungshärtbare Zusammensetzungen sowie
- oxidativ härtende Formulierungen.

Unter Polyurethan-2K-Formulierungen versteht man Formulierungen, die als Bindemittel wenigstens eine Polyol-Komponente, z.B. niedermolekulare Verbindungen mit wenigstens 2 Hydroxylgruppen sowie oligomere oder polymere Substanz mit im Mittel wenigstens 2 Hydroxylgruppen pro Molekül, beispielsweise ein Polyacrylatpolyol, ein Polyetherpolyol oder ein Polyesterpolyol, und wenigstens einen Isocyanat-Härter, d.h. eine oligomere Verbindung mit im Mittel wenigstens 2,1 NCO-Gruppen pro Molekül, z.B. ein Biuret, Allophanat oder Cyanurat der vorgenannten Diisocyanate, enthalten. Diese 2K-Formulierungen härten unter Ausbildung eines Polyurethan-Netzwerks aus.

Unter Epoxid-2K-Formulierungen versteht man Formulierungen, die als Bindemittel wenigstens ein Epoxidharz, z.B. ein Epoxidharz auf Basis eines Diglycidylethers des Bisphenol-A, oder auf Basis eines Diglycidylethers von kernhydriertem Bisphenol-A, und wenigstens einen aminischen Härter, d.h. eine niedermolekulare oder oligomere Verbindung mit wenigstens zwei primären und/oder sekundären Aminogruppen, enthalten.

Unter strahlungshärtbaren Zusammensetzungen versteht man Formulierungen, die ein Bindemittel auf Basis photopolymerisierbarer Präpolymere, die unter Einwirkung von Licht oder aktinischer Strahlung zu einem polymeren Netzwerk aushärten. Zu den photopolymerisierbaren Präpolymeren zählen insbesondere Oligomere, die im Mittel wenigstens 2 ethylenisch ungesättigte Gruppen, insbesondere Acrylat-, Methacrylat- oder Allylgruppen aufweisen, beispielsweise Urethan-Acrylate, Polyetheracrylate und Polyesteracrylate.

Unter oxidativ härtenden Formulierungen versteht man Formulierungen, die als Bindemittel eine oligomere Substanz enthalten, welche unter Einwirkung von Sauerstoff zu einem festen Polymerfilm aushärtet. Beispiele für derartige Substanzen sind ungesättigte Fettsäuren und Ester ungesättigter Fettsäuren, z.B. Alkydharze auf Basis ungesättigter Fettsäuren.

Gegenstand der Erfindung sind auch Beschichtungsmittelformulierungen, die
a) wenigstens ein organisches Bindemittel, insbesondere wenigstens ein organisches Bindemittel, das unter thermisch härtenden Bindemitteln, strahlungshärtbaren Zusammensetzungen, oxidativ härtenden Bindemitteln, Epoxid-Harzen und 2K-Polyurethan-Bindemitteln ausgewählt ist; und
b) wenigstens ein erfindungsgemäßes Blockcopolymer der Formel I oder eine erfindungsgemäße Polymerzusammensetzung enthalten.

Gegenstand der Erfindung sind auch Beschichtungsmittelformulierungen auf Basis einer 2K-Polyurethanformulierung, die erste Formulierung, welche
a') wenigstens ein Bindemittelkomponente der 2K-Polyurethanformulierung, vorzugsweise die Polyolkomponente, insbesondere wenigstens ein polymeres Polyol, und
b) wenigstens ein erfindungsgemäßes Blockcopolymer der Formel I oder eine erfindungsgemäße Polymerzusammensetzung enthält,
und eine separate, zweite Formulierung umfassen, welche die komplementäre Bindemittelkomponente der 2K-Polyurethanformulierung, insbesondere die IsocyanatKomponente enthält.

Die erfindungsgemäßen Blockcopolymere bzw. die erfindungsgemäßen Polymerzusammensetzungen werden dabei üblicherweise in einer Menge eingesetzt, dass die Gesamtmenge an Blockcopolymer der Formel I in der Beschichtungsmittelformulierung im Bereich von 0,01 bis 5 Gew.-%, insbesondere im Bereich von 0,1 bis 3 Gew.-% und speziell im Bereich von 0,2 bis 2 Gew.-%, bezogen auf das Gesamtgewicht der Beschichtungsmittelformulierung liegt.

Neben dem Bindemittel und dem erfindungsgemäßen Blockcopolymeren der Formel I können die Beschichtungsmittelformulierungen einen oder mehrere Bestandteile enthalten, wie sie üblicherweise in Beschichtungsmittelformulierungen enthalten sein können. Die Art dieser zusätzlichen Bestandteile richtet sich in an sich bekannter Weise nach dem gewünschten Anwendungszweck und dem jeweiligen Bindemittelsystem.

Zu den weiteren Bestandteilen zählen vor allem Farbmittel, wie Farbstoffe und Pigmente, Füllstoffe, flüssige Lösungs- und Verdünnungsmittel einschließlich sogenannter Reaktivverdünner sowie herkömmliche Additive.

Geeignete Farbmittel sind vor allem organische wie anorganische Pigmente. Beispiele organischer Pigmente sind Farbpigmente und perlmutterartige Pigmente wie Azo-, Disazo-, Naphthol-, Benzimidazolon-, Azokondensations-, Metallkomplex-, Isoindolinon-, Chinophthalon- und Dioxazinpigmente, polycyclische Pigmente wie Indigo, Thioindigo, Chinacridone, Phthalocyanine, Perylene, Perinone, Anthrachinone, z.B. Aminoanthrachinones oder Hydroxyanthrachinones, Anthrapyrimidines, Indanthrone, Flavanthrone, Pyranthrone, Anthantrone, Isoviolanthrone, Diketopyrrolopyrrole sowie Carbazole, z.B. Carbazolviolett und der gleichen. Weitere Beispiele organischer Pigment können folgender Monographie entnommen werden: W. Herbst, K. Hunger "Industrielle Organische Pigmente" 2. Auflage, 1995, VCH Verlagsgesellschaft, ISBN: 3-527-28744-2. Beispiele anorganischer Pigmente sind metallische Blättchen, wie Aluminium, weiterhin Aluminiumoxid, Eisen(III)oxid, Chrom(III)oxid, Titan(IV)oxid, Zircon(IV)oxid, Zinkoxid, Zinksulfid, Zinkphosphat, gemischte Metalloxidphosphate, Molybdänsulfid, Cadmiumsulfid, Graphit, Vanadate wie Bismuth-Vanadat, Chromate, wie Blei(IV)chromate, Molybdate wie Blei(IV)molybdat und Mischungen davon.

Geeignete Füllstoffe sind beispielsweise anorganische oder organische partikelförmige Materialien wie beispielsweise Calciumcarbonate und Silikate sowie anorganische Fasermaterialien wie beispielsweise Glasfaser. Auch organische Füllstoffe wie Kohlefaser und Mischungen aus organischen und anorganischen Füllstoffen, wie beispielsweise Mischungen aus Glas- und Kohlefasern oder Mischungen aus Kohlefasern und anorganischen Füllstoffen, können Anwendung finden. Die Füllstoffe können in einer Menge von 1 bis 75 Gew.-%, bezogen auf das Gesamtgewicht der Zusammensetzung, zugesetzt werden.

Beispiele für Lösungsmittel sind vor allem organische Lösungsmittel, z.B. die zuvor genannten Lösungsmittel L.1, L.2, L.3, L.4, L.5 und L.6, weiterhin aliphatische und cycloaliphatische Kohlenwasserstoffe und Kohlenwasserstoffgemische.

Beispiele für Reaktivverdünner sind vor allem die vorgenannten monoethylenisch ungesättigte Monomere, insbesondere die zuvor genannten Alkyl- und Cycloalkylester der Acrylsäure oder der Methacrylsäure, weiterhin heterocyclische Acrylat- und Methacrylate wie Tetrahydrofurfuryl(meth)acrylat und 1,3-Dioxolan-4-ylmethyl-(meth)acrylat aber auch zweifach oder mehrfach ethylenisch ungesättigte Monomere wie Alkylenglykoldiacrylate und -dimethacrylate, z.B. 1,4-Butandioldi(meth)acrylat und 1,6-Hexandioldi(meth)acrylat, Oligoalkylenglykoldiacrylate und -dimethacrylate wie Diethylenglykoldi(meth)acrylat, Triethylenglykoldi(meth)acrylat und Diproylenglykoldi(meth)acrylat, Pentaerythritoldi- und tri(meth)acrylat.

Geeignete herkömmliche Additive umfassen beispielsweise Antioxidantien, UV-Absorber/Lichtstabilisatoren, Metalldeaktivatoren, Antistatika, Verstärkungsstoffe, Füllstoffe, Antifoggingmittel, Treibmittel, Biozide, Weichmacher, Gleitmittel, Emulgatoren, Rheologiemittel, Katalysatoren, Photoinitiatoren, Adhäsionsregulatoren, optische Aufheller, Flammschutzmittel, Antitropfmittel und Nukleierungsmittel, sowie Gemische davon.

Die gegebenenfalls verwendeten Lichtstabilisatoren/UV-Absorber, Antioxidantien und Metalldeaktivatoren weisen vorzugsweise eine hohe Migrationsstabilität und Temperaturbeständigkeit auf. Sie sind beispielsweise aus den Gruppen a) bis t) ausgewählt. Die Verbindungen der Gruppen a) bis g) und i) stellen Lichtstabilisatoren/UV-Absorber dar, während Verbindungen j) bis t) als Stabilisatoren wirken.
a) 4,4-Diarylbutadiene,
b) Zimtsäureester,
c) Benzotriazole,
d) Hydroxybenzophenone,
e) Diphenylcyanacrylate,
f) Oxamide,
g) 2-Phenyl-1,3,5-triazine,
h) Antioxidantien,
i) Nickelverbindungen,
j) sterisch gehinderte Amine,
k) Metalldesaktivatoren,
l) Phosphite und Phosphonite,
m) Hydroxylamine,
n) Nitrone,
o) Aminoxide,
p) Benzofuranone und Indolinone,
q) Thiosynergisten,
r) Peroxid-zerstörende Verbindungen,
s) Polyamidstabilisatoren und
t) basische Costabilisatoren.

Die Wahl geeigneter herkömmlicher Additive für die erfindungsgemäße Zusammensetzung hängt vom jeweiligen Verwendungszweck der Beschichtungsmittelformulierungen ab und kann im Einzelfall vom Fachmann bestimmt werden.

Die Applikation der Beschichtungsmittelformulierung zum Zwecke der Herstellung einer Beschichtung auf einem Substrat kann durch alle üblichen Applikationsmethoden wie z. B. Spritzen, Rakeln, Streichen, Gießen, Tauchen oder Walzen erfolgen. Vorzugsweise werden Spritzapplikationsmethoden angewandt wie zum Beispiel Druckluftspritzen, Airless Spritzen, Hochrotation, elektrostatischer Sprühauftrag (ESTA), gegebenenfalls verbunden mit Heißspritzapplikation wie zum Beispiel Hot-Air-Heißspritzen. Die Applikation kann bei Temperaturen von max. 70 bis 80°C durchgeführt werden, so dass geeignete Applikationsviskositäten erreicht werden, ohne dass bei der kurzzeitig einwirkenden thermischen Belastung eine Veränderung oder Schädigungen des Beschichtungsmittels und seines gegebenenfalls wiederaufzubereitenden Overspray eintreten. So kann das Heißspritzen so ausgestaltet sein, dass das Beschichtungsmittel nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem Beschichtungsmittel selbst, betrieben wird.

Selbstverständlich können die vorstehend beschriebenen Applikationsmethoden auch bei der Herstellung weiterer Lackschichten oder der Basislackschicht im Rahmen der Herstellung eines Mehrschichtaufbaus angewandt werden. Hierbei können jeweils unterschiedliche Beschichtungsstoffe für den Aufbau der verschiedenen Schichten angewandt werden. Bevorzugt ist die Applikation auf einer Basislackschicht.

Als Substrate kommen alle zu lackierenden Oberflächen, die einer kombinierten Härtung zugänglich sind, sowohl grundiert als auch ungrundiert, in Betracht, das sind z. B.: Metalle, Kunststoffe, Holz, Keramik, Stein, Textil, Faserverbunde, Leder, Glas, Glasfasern, Glas- und Steinwolle, mineral- und harzgebundene Baustoffe wie Gips- und Zementplatten oder Dachziegel.

Die folgenden Beispiele dienen der Erläuterung der Erfindung.

### Analytik:

Die Bestimmung der dynamischen Reibekoeffizienten (COF: Coefficient of friction) erfolgte mittels eines COF Testers von Labthink Instruments Co Ltd. nach der "Pull-Meter"-Methode (ASTM C-1028-96).

Die Bestimmung des Molekulargewichts der Pfropfcopolymere erfolgte mittels Gelpermeationschromatographie (GPC) auf einem Gerät der Firma Waters. Die Proben wurden in Tetrahydrofuran (1 ml/min.) über 4 gepackte Säulen (ä 30 cm) bei 25°C chromatografiert. Das Säulenmaterial bestand aus vernetzten Polystyren-Divinylbenzen-Teilchen (ø =5 µm; Porenweite: 2 x 500 Å, 1 x 1000 Å, 1 x 10000 Å). Die Detektion erfolgte mittels eines Differentialrefraktometers.

### Einsatzmaterialien:

Heptamethyltrisiloxan: Gehalt SiH-Gruppen 4,494 mmol/g;
Molekulargewicht M: 222,5 g/mol; Kommerziell als Bis(trimethylsiloxy)methylsilan in 97 %-iger Reinheit bei der Fa. ABCR erhältlich.

### Dihydro-Polydimethylsiloxan 1:

Gehalt SiH-Gruppen 1,382 mmol/g; Gewichtsmittleres Molekulargewicht M_{w}: 1447,2; wurde durch Equilibrierung eines Gemischs aus Octamethylcyclotetrasiloxan und Tetramethyldisiloxan hergestellt.

### Dihydro-Polydimethylsiloxan 2:

Gehalt SiH-Gruppen 2,796 mmol/g; Gewichtsmittleres Molekulargewicht M_{w}: 715,3; wurde durch Equilibrierung eines Gemischs aus Octamethylcyclotetrasiloxan und Tetramethyldisiloxan hergestellt.
OH-Funktionalisiertes Polyacrylat: Hydroxylzahl 130-150, 60 Gew.-%ig in Butylacetat (Synthalat® A150 der Fa. Synthopol)
Dibutylzinndilaurat (Tinstab® BL 277 der Fa. Ackros Chemicals)
Isocyanat-Härter: Biuret des Hexamethylendiisocyanats mit einem NCO-Gehalt von 16,3 Gew.-%, bestimmt nach DIN EN ISO 11909 (Desmodur® N75 Bayer)

### Handelsübliches Silikonadditiv für Druckfarben: BYK310 der Byk Additives and Instruments

### I. Herstellung NCO-funktioneller Polyacrylate PA-1 bis PA-3 - allgemeine Vorschrift:

i) Ein 500ml-Dreihalskolben, ausgestattet mit Rührer, Thermometer, Rückflusskühler und Stickstoffeinleitung, wurde mit 2-(2,6-Diethyl-2,3,6-trimethyl-4-oxo-piperidin-1-yloxy)-N-(2-hydroxy-ethyl)-2-methyl-propionamid (Regler) und n-Butylacrylat (n-BuA) beschickt und entgast. Die klare Lösung wurde unter Stickstoff auf 125°C erhitzt und bis zu einem gegebenen Festkörper polymerisiert. Anschließend wurde das Reaktionsgemisch auf 60°C abgekühlt und das nicht umgesetzte n-Butylacrylat im Hochvakuum abdestilliert. Es wurden gelblich-viskose Öle eines OH-funktionalisierten Polybutylacrylats erhalten.
ii) Das OH-funktionalisierte Polybutylacrylat aus Schritt i) wurde in 100 g trockenem Butylacetat gelöst und mit 25 mg Dibutylzinndilaurat versetzt. Anschließend gab man die entsprechende Menge Isophorondiisocyanat (IPDI) zu und rührte weitere 6 h bei 60°C. Man erhielt eine Lösung des jeweiligen NCO-funktionalisierten Polymers PA-1 bis PA-3, welche folgende Zusammensetzung aufwiesen:

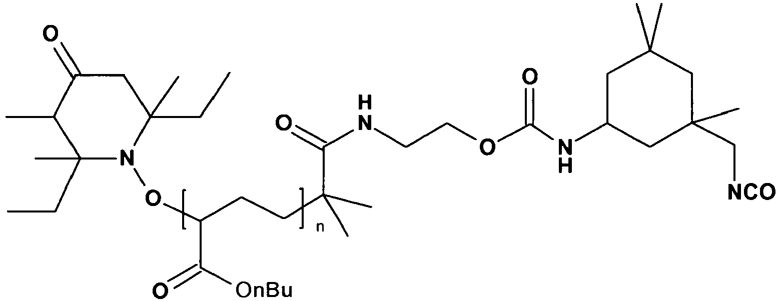

In der nachstehenden Tabelle sind die Reaktionsansätze zusammengefasst.

| Nr. | Regler | n-BuA | FK @²⁾ 150°C | OH-PA ³⁾ | IPDI ⁴⁾ | NCO-Polyacrylat-Lsg. ⁵⁾ | | |
|---|---|---|---|---|---|---|---|---|
| | [g] | [g] | [%] | [g] | [g] | n | [g] | NCO-Gehalt [mmol/g Lsg.] |
| PA-1 | 34,25 | 384,5 | 54,1 | 226,5 | 22,23 | 15 | 348,7 | 0,287 |
| PA-2 | 17,13 | 320,3 | 52,5 | 177,3 | 11,13 | 30 | 288,4 | 0,173 |
| PA-3 | 6,85 | 384,5 | 50,9 | 199,1 | 4,45 | 75 | 303,6 | 0,066 |

| | | | | | | | | |
|---|---|---|---|---|---|---|---|---|
| 1) n-BuA: n-Butylacrylat 2) Die Festkörperbestimmungen wurden auf einem Halogentrockner HG 63 der Fa. Mettler-Toledo ausgeführt 3) OH-PA: Menge des in Schritt i erhaltenen OH-funktionalisierten Polyacrylats 4) Menge Isophorondiisocyanat in Schritt ii) 5) NCO-Gehalt der in Schritt ii) erhaltenen Lösung in mmol NCO pro Gramm Lösung | | | | | | | | |

### II. Herstellung OH-funktioneller Siloxane SiOH1 bis SiOH6

Das äquimolare Reaktionsgemisch aus Alkinol und H-Siloxan in 100 ml n-Butylacetat wurde in Gegenwart von 0,000045 mol H₂PtCl₆/mol Dreifachbindung 2,5 h am Rückfluss gekocht. Der Umsatz war quantitativ. Das Lösungsmittel wurde im Vakuum destillativ entfernt. In der nachstehenden Tabelle sind die Reaktionsansätze zusammengefasst.

| **Nr.** | **Alkinol** | | **H-Polydimethylsiloxan** | | **Produkt** |
|---|---|---|---|---|---|
| | Menge | Typ | Menge | Typ | OH-Zahl |
| | [g] | | [g] | | [mg KOH/g] |
| SiOH-1 | 6,7 | PA | 85,9 | Dihydro-Polydimethylsiloxan 1 | 72,4 |
| SiOH-2 | 6,7 | PA | 42,5 | Dihydro-Polydimethylsiloxan 2 | 136,2 |
| SiOH-3 | 10,2 | BID | 85,9 | Dihydro-Polydimethylsiloxan 1 | 138,4 |
| SiOH-4 | 9,6 | PA | 38,0 | Heptamethyltrisiloxan | 201,8 |
| SiOH-5 | 10,2 | BID | 42,5 | Dihydro-Polydimethylsiloxan 2 | 252,3 |
| SiOH-6 | 14,7 | BID | 38,0 | Heptamethyltrisiloxan | 363,6 |

| | | | | | |
|---|---|---|---|---|---|
| BID: Butindiol; PA: Propargylalkohol | | | | | |

### Beispiele 1 bis 6: Herstellung erfindungsgemäßer Blockcopolymere (Allgemeine Vorschrift)

Die unter I erhaltenen Lösungen der NCO-funktionellen Polyacrylate PA-1, PA2 oder PA-3 wurden mit den in der folgenden Tabelle angegebenen OH-funktionellen Siloxane SiOH-1 bis SiOH-6 gemischt und bis zum vollständigen NCO-Umsatz (ca. 6 h) bei 60°C unter Schutzgasatmosphäre gerührt. Die Umsatzkontrolle erfolgte über NCO-Titration. In der nachstehenden Tabelle sind die Reaktionsansätze zusammengefasst.

| Beispiel | NCO-funkt. Polyacrylat [g] | | | OH-funkt. Polydimethylsiloxan [g] | | | | | |
|---|---|---|---|---|---|---|---|---|---|
| | PA-1 | PA-2 | PA-3 | SiOH-1 | SiOH-2 | SiOH-3 | SiOH-4 | SiOH-5 | SiOH-6 |
| | | | | | | | | | |
| **1** | 50,0 | - | - | - | - | 1,5 | - | - | - |
| **2** | - | 100,0 | - | - | - | - | 1,0 | - | - |
| **3** | - | 100,0 | - | - | - | 1,8 | - | - | - |
| **4** | - | - | 50,0 | 1,3 | - | - | - | - | - |
| **5** | 50,0 | - | - | - | 3,0 | - | - | - | - |
| **6** | 50,0 | - | - | - | - | - | - | 0,8 | - |
| **7** | 50,0 | - | - | - | - | - | - | - | 2,0 |

### IV Anwendungstechnische Prüfung

Die erfindungsgemäßen Blockcopolymere wurden auf ihre Wirksamkeit als Slip- und Levelling Agents getestet. Als Parameter wurde die Verringerung des Reibungskoeffizienten (COF) gemessen. Zum Einsatz kam eine 2-K-Beschichtungsformulierung folgender Zusammensetzung:

| | | |
|---|---|---|
| Komponente A: | 89,0 g | Synthalat A150 |
| | 10,0 g | Butylacetat |
| | 0,5 g | Blockcopolymer |
| | 0,5 g | Dibutylzinndilaurat als 1 %ige Lösung in Butylacetat |
| Gesamt | 100 g | |
| | | |
| Komponente B: | 35,0 g | Desmodur N75 (Härter) |

Komponente A und B wurden in Verhältnis 100: 35 gemischt. Anschließend wurde der so erhaltene Klarlack mit einem 75 µm-Rakel auf PE-Folie appliziert und über Nacht bei Raumtemperatur ausgehärtet. Der dynamische Reibungskoeffizient (Dyn. COF) wurde nach der eingangs beschriebenen Methode bestimmt.

| Beispiel | Dyn. COF |
|---|---|
| | |
| Blanko | 0,36 |
| BYK310 | 0,25 |
| 1 | 0,16 |
| 2 | 0,35 |
| 3 | 0,19 |
| 4 | 0,27 |
| 5 | 0,21 |
| 6 | 0,22 |
| 7 | 0,34 |

## Patentansprüche

1. Block-Copolymer der allgemeinen Formel I
A{X-[O-C(O)NH-Y-NH-C(O)-O-M-B]ₖ}ₙ (I)
worin
n für eine Zahl im Bereich von 1 bis 40 steht;
k für 1 oder 2 steht;
A für einen Poly(dimethylsiloxan)-Block steht;
B für einen aus ethylenisch ungesättigten Monomeren aufgebauten Polymerblock steht, der gegebenenfalls eine von Wasserstoff verschiedene Endgruppe aufweist;
X für einen bivalenten oder trivalenten Rest mit 2 bis 20 C-Atomen steht, der gesättigt oder ungesättigt ist und der gegebenenfalls 1, 2, 3 oder 4 Substituenten trägt, die unter OH, COOH, CONH₂, C₁-C₄-Alkoxy, C₁-C₄-Alkoxycarbonyl und Halogen ausgewählt sind;
Y für einen bivalenten Kohlenwasserstoffrest mit 2 bis 20 C-Atomen steht, der gesättigt oder ungesättigt ist,
M für eine chemische Bindung oder C₂-C₁₀-Alkylen steht, das durch ein oder zwei nicht unmittelbar benachbarte Gruppen, ausgewählt unter O, C(=O)O und (C=O)NH, unterbrochen sein kann und das gegebenenfalls 1, 2, 3 oder 4 Substituenten trägt, die unter OH, COOH, CONH₂, C₁-C₄-Alkoxy, C₁-C₄-Alkoxycarbonyl und Phenyl ausgewählt sind.

2. Block-Copolymer nach Anspruch 1, worin der Polydimethylsiloxan-Block A ein zahlenmittleres Molekulargewicht im Bereich von 200 bis 20000 g/mol, insbesondere von 500 bis 10000 g/mol aufweist.

3. Block-Copolymer nach Anspruch 1 oder 2, worin der Polymerblock B ein zahlenmittleres Molekulargewicht im Bereich von 1000 bis 50000 g/mol, insbesondere von 2000 bis 20000 g/mol aufweist.

4. Block-Copolymer nach einem der vorhergehenden Ansprüche, das ein zahlenmittleres Molekulargewicht im Bereich von 1500 bis 200000 g/mol insbesondere 2000 bis 100000 g/mol aufweist.

5. Block-Copolymer nach einem der vorhergehenden Ansprüche, worin der Polydimethylsiloxan-Block A 0,1 bis 70 Gew.-%, insbesondere 0,2 bis 40 Gew.-%, bezogen auf die Gesamtmasse des Blockcopolymeren, ausmacht.

6. Block-Copolymer nach einem der vorhergehenden Ansprüche, worin der Polymerblock B zu wenigstens 50 Gew.-%, bezogen auf B, aus monoethylenisch ungesättigten Monomeren aufgebaut ist, die unter Estern der Acrylsäure mit C₁-C₂₀-Alkanolen, Estern der Methacrylsäure mit C₁-C₂₀-Alkanolen, Estern der Acrylsäure mit C₅-C₂₀-Cycloalkanolen, Estern der Methacrylsäure mit C₅-C₂₀-Cycloalkanolen, Estern der Acrylsäure mit Polyethermonoolen und Estern der Methacrylsäure mit Polyethermonoolen ausgewählt sind.

7. Block-Copolymer nach einem der vorhergehenden Ansprüche, worin der Polymerblock B eine terminale Gruppe der Formel Z 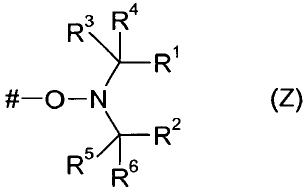 aufweist, worin # die Anknüpfung an ein C-Atom des Polymerblock B bedeutet,
R¹ und R² unabhängig voneinander für C₁-C₂₀-Alkyl stehen, das gegebenenfalls einen unter C₁-C₄-Alkoxy und C₁-C₄-Alkoxy-C₁-C₄-alkoxy ausgewählten Substituenten trägt, oder
R¹ und R² gemeinsam für lineares C₂-C₁₀-Alkylen oder lineares C₂-C₁₀-Alkenylen stehen, worin gegebenenfalls eine oder zwei CH₂-Gruppen durch O, C=O, oder NR^{x} ersetzt sein können, wobei lineares C₂-C₁₀-Alkylen und lineares C₂-C₁₀-Alkenylen unsubstituiert sind oder 1, 2, 3 oder 4 Substituenten aus der Gruppe C₁-C₄-Alkyl, C₁-C₄-Alkoxy, C₁-C₄-Alkoxy-C₁-C₄-alkoxy, COOH und CONH₂, aufweisen und R^{x} für C₁-C₄-Alkyl oder C₁-C₄-Alkoxy steht;
R³, R⁴, R⁵ und R⁶ unabhängig voneinander für C₁-C₄-Alkyl stehen.

8. Block-Copolymer nach einem der vorhergehenden Ansprüche, worin n im Mittel für 1 bis 10, insbesondere für 2 bis 5 steht.

9. Block-Copolymer nach einem der vorhergehenden Ansprüche, worin X für C₂-C₁₀-Alkylen oder C₂-C₁₀-Alkenylen steht, die unsubstituiert sind oder 1 oder 2 Substituenten aus der Gruppe OH, C₁-C₄-Alkoxy, COOH und C₁-C₄-Alkoxycarbonyl, aufweisen, wobei C₂-C₁₀-Alkylen auch durch 1,2,3 oder 4, nicht benachbarte Sauerstoffatome unterbrochen sein kann.

10. Block-Copolymer nach einem der vorhergehenden Ansprüche, worin Y für C₂-C₁₀-Alkylen, C₂-C₁₀-Alkenylen, C₅-C₁₀-Cycloalkylen, das gegebenenfalls 1, 2 oder 3 Methylgruppen aufweist, Phenylen, das gegebenenfalls 1, 2 oder 3 Methylgruppen aufweist, oder eine Gruppe Q-R-(Q)_{q} steht, worin q für 0 oder 1 steht, Q für C₅-C₁₀-Cycloalkylen, das gegebenenfalls 1, 2 oder 3 Methylgruppen aufweist, oder Phenylen, das gegebenenfalls 1, 2 oder 3 Methylgruppen aufweist, steht und R für C₁-C₁₀-Alkylen steht.

11. Block-Copolymer nach einem der vorhergehenden Ansprüche, das erhältlich ist durch ein Verfahren, welches die folgenden Schritte umfasst:
i) Bereitstellung eines OH-funktionalisierten Poly(dimethylsiloxan) der Formel A[X(-OH)ₖ]ₙ, worin A, X, k und n die in einem der Ansprüche 1, 2, 8 oder 9 angegebenen Bedeutungen aufweisen,
ii) Bereitstellung eines OH-funktionalisierten, aus ethylenisch ungesättigten Monomeren aufgebauten Polymers B-M-OH steht, worin B und M die in einem der Ansprüche 1,3,6 oder 7 angegebenen Bedeutungen aufweisen;
iii) Umsetzung des OH-funktionalisierten, aus ethylenisch ungesättigten Monomeren aufgebauten Polymers B-M-OH mit einem Diisocyanat der Formel II
O=C=N-Y-N=C=O (II)
wobei man ein Isocyanat-funktionalisiertes Polymer der Formel III erhält:
O=C=N-Y-NH-C(O)-O-M-B (III)
worin Y in den Formeln II und III die in einem der Ansprüche 1 oder 10 angegebenen Bedeutungen aufweist und B und M die in einem der Ansprüche 1, 3, 6 oder 7 angegebenen Bedeutungen aufweisen;
iv) Umsetzung des Isocyanat-funktionalisierten Polymers der Formel III mit dem in Schritt i) bereitgestellten OH-funktionalisierten Poly(dimethylsiloxan) der Formel A[X(-OH)ₖ]ₙ.

12. Verfahren zur Herstellung eines Block-Copolymers gemäß einem der vorhergehenden Ansprüche, welches die folgenden Schritte umfasst:
i) Bereitstellung eines OH-funktionalisierten Poly(dimethylsiloxan) der Formel A[X(-OH)ₖ]ₙ, worin A, X, k und n die in einem der Ansprüche 1, 2, 8 oder 9 angegebenen Bedeutungen aufweisen,
ii) Bereitstellung eines OH-funktionalisierten, aus ethylenisch ungesättigten Monomeren aufgebauten Polymers B-M-OH steht, worin B und M die in einem der Ansprüche 1, 3, 6 oder 7 angegebenen Bedeutungen aufweist;
iii) Umsetzung des in Schritt i) bereitgestellten OH-funktionalisierten Poly(dimethylsiloxans) der Formel A[X(-OH)ₖ]ₙ mit einem Diisocyanat der Formel II
O=C=N-Y-N=C=O (II)
wobei man ein Isocyanat-funktionalisiertes Polydimethylsiloxan der Formel IV erhält:
[(O=C=N-Y-NH-C(O)-O)ₖ-X]ₙ-A (IV)
worin Y in den Formeln II und IV die in einem der Ansprüche 1 oder 10 angegebenen Bedeutungen aufweist und A, X, k und n die in einem der Ansprüche 1, 2, 8 oder 9 angegebenen Bedeutungen aufweisen;
iv) Umsetzung des Isocyanat-funktionalisierten Polymers der Formel III mit dem in Schritt ii) bereitgestellten OH-funktionalisierten, aus ethylenisch ungesättigten Monomeren aufgebauten Polymeren B-M-OH.

13. Polymerzusammensetzung, enthaltend wenigstens ein Blockcopolymer der Formel I nach einem der Ansprüche 1 bis 10.

14. Verwendung eines Blockcopolymeren nach einem der Ansprüche 1 bis 10 oder einer Polymerzusammensetzung nach Anspruch 13 als Additiv in Beschichtungsmittelformulierungen, die wenigstens ein organisches Bindemittel enthalten.

15. Verwendung eines Blockcopolymeren nach einem der Ansprüche 1 bis 10 oder einer Polymerzusammensetzung nach Anspruch 13 als Verlaufshilfsmittel in Beschichtungsmittelformulierungen, die wenigstens ein organisches Bindemittel enthalten.

16. Verwendung eines Blockcopolymeren nach einem der Ansprüche 1 bis 10 oder einer Polymerzusammensetzung nach Anspruch 13 als schmutzabweisendes Additiv, insbesondere als hydrophobierendes Anti-Graffiti-Mittel in Beschichtungsmittelformulierungen, die wenigstens ein organisches Bindemittel enthalten.

17. Verwendung nach Anspruch 14, 15 oder 16, wobei das Bindemittel ein thermisch härtbares Bindemittel ist.

18. Verwendung nach Anspruch 14, 15 oder 16, wobei die Beschichtungsmittelformulierung eine 2-Komponenten-Polyurethan-Formulierungen, ein Epoxid-Formulierungen, eine strahlungshärtbare Zusammensetzung oder eine oxidativ härtende Formulierung ist.

19. Beschichtungsmittelformulierung, enthaltend
a) wenigstens ein organisches Bindemittel und
b) wenigstens ein Blockcopolymer der Formel I nach einem der Ansprüche 1 bis 10 oder eine Polymerzusammensetzung nach Anspruch 13.

20. Beschichtungsmittelformulierung nach Anspruch 19, enthaltend wenigstens ein Blockcopolymer der Formel I nach einem der Ansprüche 1 bis 10 in einer Menge von 0,01 bis 5 Gew.-%, bezogen auf das Gesamtgewicht der Beschichtungsmittelformulierung.

## Claims

1. A block copolymer of the general formula I
A{X-[O-C(O)NH-Y-NH-C(O)-O-M-B]k}n (I)
in which
n is a number in the range from 1 to 40;
k is 1 or 2;
A is a poly(dimethylsiloxane) block;
B is a polymer block which is composed of ethylenically unsaturated monomers and which optionally has an end group other than hydrogen;
X is a divalent or trivalent radical having 2 to 20 C atoms, which is saturated or unsaturated and which optionally carries 1, 2, 3, or 4 substituents selected from OH, COOH, CONH2, C1-C4 alkoxy, C1-C4 alkoxycarbonyl, and halogen;
Y is a divalent hydrocarbon radical having 2 to 20 C atoms, which is saturated or unsaturated,
M is a chemical bond or C2-C10 alkylene which may be interrupted by one or two groups that are not directly adjacent and that are selected from 0, C(=O)O, and (C=O) NH, and which optionally carries 1, 2, 3, or 4 substituents selected from OH, COOH, CONH2, C1-C4 alkoxy, C1-C4 alkoxycarbonyl, and phenyl.

2. The block copolymer according to claim 1, wherein the polydimethylsiloxane block A has a number-average molecular weight in the range from 200 to 20 000 g/mol, more particularly from 500 to 10 000 g/mol.

3. The block copolymer according to claim 1 or 2, wherein the polymer block B has a number-average molecular weight in the range from 1000 to 50 000 g/mol, more particularly from 2000 to 20 000 g/mol.

4. The block copolymer according to any of the preceding claims, having a number-average molecular weight in the range from 1500 to 200 000 g/mol, more particularly 2000 to 100 000 g/mol.

5. The block copolymer according to any of the preceding claims, wherein the polydimethylsiloxane block A makes up 0.1 to 70 wt.%, more particularly 0.2 to 40 wt.%, based on the total mass of the block copolymer.

6. The block copolymer according to any of the preceding claims, wherein the polymer block B is composed to an extent of at least 50 wt.%, based on B, of monoethylenically unsaturated monomers selected from esters of acrylic acid with C1-C20 alkanols, esters of methacrylic acid with C1-C20 alkanols, esters of acrylic acid with C5-C20 cycloalkanols, esters of methacrylic acid with C5-C20-cycloalkanols, esters of acrylic acid with polyethermonools, and esters of methacrylic acid with polyethermonools.

7. The block copolymer according to any of the preceding claims, wherein the polymer block B has a terminal group of the formula Z 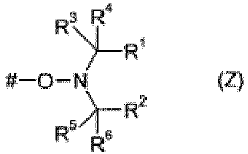 in which # denotes the attachment to a C atom of the polymer block B,
R1 and R2 independently of one another are C1-C20 alkyl which optionally carries a substituent selected from C1-C4 alkoxy and C1-C4 alkoxy-C1-C4 alkoxy, or
R1 and R2 together are linear C2-C10 alkylene or linear C2-C10 alkenylene in which optionally one or two CH2 groups may have been replaced by O, C=O, or NRx, where linear C2-C10 alkylene and linear C2-C10 alkenylene are unsubstituted or have 1, 2, 3, or 4 substituents from the group C1-C4 alkyl, C1-C4 alkoxy, C1-C4 alkoxy-C1-C4 alkoxy, COOH, and CONH2, and Rx is C1-C4 alkyl or C1-C4 alkoxy;
R3, R4, R5, and R6 independently of one another are C1-C4 alkyl.

8. The block copolymer according to any of the preceding claims, wherein n is on average 1 to 10, more particularly 2 to 5.

9. The block copolymer according to any of the preceding claims, wherein X is C2-C10 alkylene or C2-C10 alkenylene which are unsubstituted or have 1 or 2 substituents from the group OH, C1-C4 alkoxy, COOH, and C1-C4 alkoxycarbonyl, it also being possible for C2-C10 alkylene to be interrupted by 1, 2, 3, or 4 non¬adjacent oxygen atoms.

10. The block copolymer according to any of the preceding claims, wherein Y is C2-C10 alkylene, C2-C10 alkenylene, C5-C10 cycloalkylene, which optionally has 1, 2, or 3 methyl groups, phenylene, which optionally has 1, 2, or 3 methyl groups, or a group Q-R- (Q) q, in which q is 0 or 1, Q is C5-C10 cycloalkylene, which optionally has 1, 2, or 3 methyl groups, or phenylene, which optionally has 1, 2, or 3 methyl groups, and R is C1-C10 alkylene.

11. The block copolymer according to any of the preceding claims, obtainable by a process which comprises the following steps:
i) providing an OH-functionalized poly (dimethylsiloxane) of the formula A[X(-OH)k]n, in which A, X, k, and n have the definitions indicated in any of claims 1, 2, 8, and 9,
ii) providing an OH-functionalized polymer B-M-OH which is composed of ethylenically unsaturated monomers and in which B and M have the definitions indicated in any of claims 1, 3, 6, and 7;
iii) reacting the OH-functionalized polymer B-M-OH which is composed of ethylenically unsaturated monomers with a diisocyanate of the formula II
O=C=N-Y-N=C=O (II)
to give an isocyanate-functionalized polymer of the formula III:
O=C=N-Y-NH-C(O)-O-M-B (III)
wherein Y in the formulae II and III has the definitions indicated in either of claims 1 and 10 and B and M have the definitions indicated in any of claims 1, 3, 6, and 7;
iv) reacting the isocyanate-functionalized polymer of the formula III with the OH-functionalized poly(dimethylsiloxane) of the formula A[X(-OH)k]n provided in step i).

12. A process for preparing a block copolymer according to any of the preceding claims, which comprises the following steps:
i) providing an OH-functionalized poly (dimethylsiloxane) of the formula A[X(-OH)k]n, in which A, X, k, and n have the definitions indicated in any of claims 1, 2, 8, and 9,
ii) providing an OH-functionalized polymer B-M-OH which is composed of ethylenically unsaturated monomers and in which B and M have the definitions indicated in any of claims 1, 3, 6, and 7;
iii) reacting the OH-functionalized poly(dimethylsiloxane) of the formula A[X(-OH)k]n, provided in step i), with a diisocyanate of the formula II
O=C=N-Y-N=C=O (II)
to give an isocyanate-functionalized polydimethylsiloxane of the formula IV:
[(O=C=N-Y-NH-C(O)-O)k-X]n-A (IV)
wherein Y in the formulae II and IV has the definitions indicated in either of claims 1 and 10 and A, X, k, and n have the definitions indicated in any of claims 1, 2, 8, and 9;
iv) reacting the isocyanate-functionalized polymer of the formula III with the OH-functionalized polymer B-M-OH composed of ethylenically unsaturated monomers that was provided in step ii).

13. A polymer composition comprising at least one block copolymer of the formula I according to any of claims 1 to 10.

14. The use of a block copolymer according to any of claims 1 to 10 or of a polymer composition according to claim 13 as an additive in a coating material formulation which comprises at least one organic binder.

15. The use of a block copolymer according to any of claims 1 to 10 or of a polymer composition according to claim 13 as a flow control assistant in a coating material formulation which comprises at least one organic binder.

16. The use of a block copolymer according to any of claims 1 to 10 or of a polymer composition according to claim 13 as a soil repellency additive, more particularly as a hydrophobizing antigraffiti agent, in a coating material formulation which comprises at least one organic binder.

17. The use according to claim 14, 15, or 16, the binder being a thermally curable binder.

18. The use according to claim 14, 15, or 16, the coating material formulation being a 2-component polyurethane formulation, an epoxide formulation, a radiation-curable composition, or an oxidatively curing formulation.

19. A coating material formulation comprising
a) at least one organic binder and
b) at least one block copolymer of the formula I according to any of claims 1 to 10 or a polymer composition according to claim 13.

20. The coating material formulation according to claim 19, comprising at least one block copolymer of the formula I according to any of claims 1 to 10 in an amount of 0.01 to 5 wt.%, based on the total weight of the coating material formulation.

## Revendications

1. Copolymère séquencé de formule générale I
A{X-[O-C(O)NH-Y-NH-C(O)-O-M-B]ₖ}ₙ (I)
dans laquelle
n représente un nombre dans la plage de 1 à 40 ;
k représente 1 ou 2 ;
A représente une séquence poly(diméthylsiloxane) ;
B représente une séquence polymère constituée de monomères à insaturation éthylénique, qui comporte éventuellement un groupe terminal différent d'un atome d'hydrogène ;
X représente un radical divalent ou trivalent ayant de 2 à 20 atomes de carbone, qui est saturé ou insaturé et qui porte éventuellement 1, 2, 3 ou 4 substituants qui sont choisis parmi OH, COOH, CONH₂, alcoxy en C₁-C₄, alcoxy (C₁-C₄) carbonyle et halogéno ;
Y représente un radical hydrocarboné divalent ayant de 2 à 20 atomes de carbone, qui est saturé ou insaturé,
M représente une liaison chimique ou un groupe alkylène en C₂-C₁₀ qui peut être interrompu par un ou deux groupes non contigus, choisis parmi 0, C(=O)O et (C=O)NH et qui porte éventuellement 1, 2, 3 ou 4 substituants qui sont choisis parmi OH, COOH, CONH₂, alcoxy en C₁-C₄, alcoxy(C₁-C₄)carbonyle et phényle.

2. Copolymère séquencé selon la revendication 1, dans lequel la séquence polydiméthylsiloxane A présente une masse moléculaire moyenne en nombre dans la plage de 200 à 20 000 g/mole, en particulier de 500 à 10 000 g/mole.

3. Copolymère séquencé selon la revendication 1 ou 2, dans lequel la séquence polymère B présente une masse moléculaire moyenne en nombre dans la plage de 1 000 à 50 000 g/mole, en particulier de 2 000 à 20 000 g/mole.

4. Copolymère séquencé selon l'une quelconque des revendications précédentes, qui présente une masse moléculaire moyenne en nombre dans la plage de 1 500 à 200 000 g/mole, en particulier de 2 000 à 100 000 g/mole.

5. Copolymère séquencé selon l'une quelconque des revendications précédentes, dans lequel la séquence polydiméthylsiloxane A représente de 0,1 à 70 % en poids, en particulier de 0,2 à 40 % en poids, par rapport à la masse totale du copolymère séquencé.

6. Copolymère séquencé selon l'une quelconque des revendications précédentes, dans lequel la séquence polymère B est constituée à raison d'au moins 50 % en poids, par rapport à B, de monomères à insaturation monoéthylénique qui sont choisis parmi des esters de l'acide acrylique avec des alcanols en C₁-C₂₀, des esters de l'acide méthacrylique avec des alcanols en C₁-C₂₀, des esters de l'acide acrylique avec des cycloalcanols en C₅-C₂₀, des esters de l'acide méthacrylique avec des cycloalcanols en C₅-C₂₀, des esters de l'acide acrylique avec des polyéthermonools et des esters de l'acide méthacrylique avec des polyéthermonools.

7. Copolymère séquencé selon l'une quelconque des revendications précédentes, dans lequel la séquence polymère B comporte un groupe terminal de formule Z 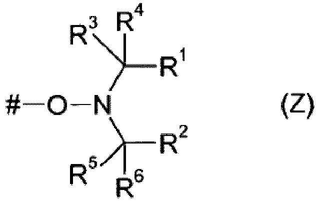 dans laquelle le signe # représente l'attachement à un atome de carbone de la séquence polymère B,
R¹ et R² représentent indépendamment l'un de l'autre un groupe alkyle en C₁-C₂₀ qui porte éventuellement un substituant choisi parmi alcoxy en C₁-C₄ et alcoxy(C₁-C₄)-alcoxy(C₁-C₄), ou
R¹ et R² représentent ensemble un groupe alkylène en C₂-C₁₀ linéaire ou alcénylène en C₂-C₁₀ linéaire, dans lequel éventuellement un ou deux groupes CH₂ peuvent être remplacés par 0, C=O ou NR^{x}, le groupe alkylène en C₂-C₁₀ linéaire et le groupe alcénylène en C₂-C₁₀ linéaire étant non substitués ou portant 1, 2, 3 ou 4 substituants choisis dans le groupe constitué par alkyle en C₁-C₄, alcoxy en C₁-C₄, alcoxy(C₁-C₄)-alcoxy(C₁-C₄), COOH et CONH₂, et R^{x} représentant un groupe alkyle en C₁-C₄ ou alcoxy en C₁-C₄ ;
R³, R⁴, R⁵ et R⁶ représentent indépendamment les uns des autres un groupe alkyle en C₁-C₄.

8. Copolymère séquencé selon l'une quelconque des revendications précédentes, dans lequel n représente en moyenne 1 à 10, en particulier 2 à 5.

9. Copolymère séquencé selon l'une quelconque des revendications précédentes, dans lequel X représente un groupe alkylène en C₂-C₁₀ ou un groupe alcénylène en C₂-C₁₀, qui sont non substitués ou portent 1 ou 2 substituants choisis dans le groupe constitué par OH, alcoxy en C₁-C₄, COOH et alcoxy(C₁-C₄)carbonyle, le groupe alkylène en C₂-C₁₀ pouvant également être interrompu par 1, 2, 3 ou 4 atomes d'oxygène non contigus.

10. Copolymère séquencé selon l'une quelconque des revendications précédentes, dans lequel Y représente un groupe alkylène en C₂-C₁₀, alcénylène en C₂-C₁₀, cycloalkylène en C₅-C₁₀ qui comporte éventuellement 1, 2 ou 3 groupes méthyle, phénylène qui comporte éventuellement 1, 2 ou 3 groupe méthyle, ou un groupe Q-R-(Q)_{q}, dans lequel q représente 0 ou 1, Q représente un groupe cycloalkylène en C₅-C₁₀ qui comporte éventuellement 1, 2 ou 3 groupes méthyle, ou phénylène qui comporte éventuellement 1, 2 ou 3 groupes méthyle, et R représente un groupe alkylène en C₁-C₁₀.

11. Copolymère séquencé selon l'une quelconque des revendications précédentes, qui peut être obtenu par un procédé qui comprend les étapes suivantes :
i) disposition d'un poly(diméthylsiloxane) à fonctionnalisation OH, de formule A[X-(OH)ₖ]ₙ, dans laquelle A, X, k et n ont les significations indiquées dans l'une quelconque des revendications 1, 2, 8 et 9,
ii) disposition d'un polymère B-M-OH à fonctionnalisation OH, constitué de monomères à insaturation éthylénique, dans lequel B et M ont les significations indiquées dans l'une quelconque des revendications 1, 3, 6 et 7,
iii) mise en réaction du polymère B-M-OH à fonctionnalisation OH, constitué de monomères à insaturation éthylénique, avec un diisocyanate de formule II
O=C=N-Y-N=C=O (II)
de sorte qu'on obtient un polymère à fonctionnalisation isocyanate de formule ICI :
O=C=N-Y-NH-C(O)-O-M-B (III)
Y dans les formules II et III ayant les significations indiquées dans l'une quelconque des revendications 1 et 10 et B et M ayant les significations indiquées dans l'une quelconque des revendications 1, 3, 6 et 7 ;
iv) mise en réaction du polymère de formule III, à fonctionnalisation isocyanate, avec le poly(diméthylsiloxane) de formule A[X-(OH)ₖ]ₙ, à fonctionnalisation OH, fourni dans l'étape i).

12. Procédé pour la préparation d'un copolymère séquencé selon l'une quelconque des revendications précédentes, qui comprend les étapes suivantes :
i) disposition d'un poly(diméthylsiloxane) à fonctionnalisation OH, de formule A[X-(OH)ₖ]ₙ, dans laquelle A, X, k et n ont les significations indiquées dans l'une quelconque des revendications 1, 2, 8 et 9,
ii) disposition d'un polymère B-M-OH à fonctionnalisation OH, constitué de monomères à insaturation éthylénique, dans lequel B et M ont les significations indiquées dans l'une quelconque des revendications 1, 3, 6 et 7,
iii) mise en réaction du poly(diméthylsiloxane) à fonctionnalisation OH, de formule A[X-(OH)ₖ]ₙ, fourni dans l'étape i), avec un diisocyanate de formule II
O=C=N-Y-N=C=O (II)
de sorte qu'on obtient un polydiméthylsiloxane à fonctionnalisation isocyanate, de formule IV :
[(O=C=N-Y-NH-C(O)-O)ₖ-X]ₙ-A (IV)
Y dans les formules II et IV ayant les significations indiquées dans l'une quelconque des revendications 1 et 10 et A, X, k et n ayant les significations indiquées dans l'une quelconque des revendications 1, 2, 8 et 9 ;
iv) mise en réaction du polymère de formule III, à fonctionnalisation isocyanate, avec le polymère B-M-OH à fonctionnalisation OH, constitué de monomères à insaturation éthylénique, fourni dans l'étape ii).

13. Composition de polymère, contenant au moins un copolymère séquencé de formule I selon l'une quelconque des revendications 1 à 10.

14. Utilisation d'un copolymère séquencé selon l'une quelconque des revendications 1 à 10 ou d'une composition de polymère selon la revendication 13, en tant qu'additif dans des compositions de produits de revêtement qui contiennent au moins un liant organique.

15. Utilisation d'un copolymère séquencé selon l'une quelconque des revendications 1 à 10 ou d'une composition de polymère selon la revendication 13, en tant qu'agent d'étalement dans des compositions de produits de revêtement qui contiennent au moins un liant organique.

16. Utilisation d'un copolymère séquencé selon l'une quelconque des revendications 1 à 10 ou d'une composition de polymère selon la revendication 13, en tant qu'additif antisalissure, en particulier en tant qu'agent antigraffiti à effet hydrophobe dans des compositions de produits de revêtement qui contiennent au moins un liant organique.

17. Utilisation selon la revendication 14, 15 ou 16, dans laquelle le liant est un liant durcissable thermiquement.

18. Utilisation selon la revendication 14, 15 ou 16, dans laquelle la composition de produit de revêtement est une composition de polyuréthane bicomposant, une composition d'époxyde, une composition durcissable par irradiation ou une composition durcissant par oxydation.

19. Composition de produit de revêtement, contenant
a) au moins un liant organique et
b) au moins un copolymère séquencé de formule I selon l'une quelconque des revendications 1 à 10 ou une composition de polymère selon la revendication 13.

20. Composition de produit de revêtement selon la revendication 19, contenant au moins un copolymère séquencé de formule I selon l'une quelconque des revendications 1 à 10 en une quantité de 0,01 à 5 % en poids, par rapport au poids total de la composition de produit de revêtement.
